# EUROPEAN PATENT SPECIFICATION

(11) **EP 2 637 412 B1**
(45) Date of publication and mention of the grant of the patent: **23.08.2017**
(21) Application number: 11838174.8
(22) Date of filing: 26.10.2011
(51) Int. Cl.: H04N 13/00

(54) **APPARATUS AND METHOD FOR RECEIVING A DIGITAL BROADCAST SIGNAL**
VORRICHTUNG UND VERFAHREN ZUM EMPFANGEN EINES DIGITALEN RUNDFUNKSIGNALS
APPAREIL ET PROCÉDÉ DE RÉCEPTION D'UN SIGNAL DE DIFFUSION NUMÉRIQUE

(30) Priority: 03.12.2010 US 419255 P; 02.11.2010 US 409515 P
(43) Date of publication of application: 11.09.2013
(73) Proprietor: LG Electronics Inc., Yeongdeungpo-gu Seoul 150-721 (KR)
(72) Inventor: SUH, Jongyeul, Seoul 137-724 (KR); CHOE, Jeehyun, Seoul 137-724 (KR); LEE, Joonhui, Seoul 137-724 (KR)
(74) Representative: Katérle, Axel
(86) International application number: PCT/KR2011/008010
(87) International publication number: WO 2012/060569

(56) References cited:
- EP-A2- 2 544 447
- WO-A1-2010/071283
- WO-A2-2010/117129
- CA-A1- 2 725 009
- KR-A- 20030 037 140
- KR-A- 20060 118 815
- KR-A- 20100 060 884
- US-A1- 2010 134 592
- US-A1- 2010 189 173

## Description

### TECHNICAL FIELD

The present invention relates to a method of receiving a digital broadcasting signal including a 3D video and apparatus therefor, and more particularly, to a method of outputting a 3D video data in a screen by receiving the digital broadcasting signal including the 3D video having a plurality of viewpoints and apparatus therefor.

### BACKGROUND ART

As the dissemination of a 3 dimensional television (3DTV) is raging, a transmission of a 3D video content performed by a digital broadcasting as well as the dissemination of the 3D video content performed by a storing media is vitalized.

In general, a 3 dimensional video provides a 3D effect using a principle of stereo vision of two eyes. Since a human feels perspective via parallax of two eyes, in other word, binocular parallax due to a space between two eyes apart from each other about 65 mm, the 3D video may provide the 3D effect and the perspective in a manner of providing a video, which makes a left eye and a right eye see a related plane video, respectively.

The 3D video display method includes a stereoscopic technique, a volumetric technique, a holographic technique, and the like. In case of the stereoscopic technique, it provides a left view image supposed to be watched by a left eye and a right view image supposed to be watched by a right eye. The stereoscopic technique enables to recognize a 3D video effect in a manner of making the left eye and the right eye watch the left view image and the right view image respectively using a polarized glasses or a display device itself.

Yet, the aforementioned 3D video is a video considering a single viewpoint only. In order to provide a viewer with the 3D video capable of being watched from a plurality of viewpoints, it is further necessary to separately provide additional information as well as a plurality of 3D videos.

In order to provide the viewer with 3D video of multi-view via a broadcasting service, it is necessary to have information and a technology capable of reproducing the 3D effect intended by a producer in a 3D multi-view display as well as data transmission for each view point.

In this case, if a viewing environment of the 3D multi-view display corresponds to a condition of which the multi-view was filmed, a viewer may be able to enjoy an intended 3D effect. Otherwise, distortion of a screen and inconvenience of watching may occur.

Hence, it is necessary to have a method of providing a related metadata to reproduce the filming condition in a multi-view environment and the intended 3D effect.

Document WO 2010/071283 A1 may be construed to disclose a digital broadcasting reception apparatus capable of displaying a stereoscopic image, comprising: a de-multiplexing unit for de-multiplexing a received digital broadcast signal; a PSIP or PSI/SI processor for extracting extended-view video information from the de-multiplexed digital broadcast signal; a decoder for decoding an extended-view video stream and a base-view video stream from the de-multiplexed digital broadcast signal; and an output formatting unit for formatting the extended-view video stream and the base-view video stream based on the extended-view video information. The extended-view video information includes the information about at least one of: the relative positional relationship between a camera that has created the extended-view video stream and a camera that has created the base-view video stream, the number of the extended-view video streams, and the arrangement structure of the cameras. The relative positional relationship indicates at least one of: the direction of the camera which has created the extended-view video stream with respect to the camera which has created the base-view video stream, and the distance between the two cameras.

Document US 2010/189173 A1 may be construed to disclose a method comprising encoding a first view component of a first view of a multi-view bitstream; and encoding a second view component of a second view; wherein the encoding of the second view component enables generating of a reference picture list for the second view component to include at least one of the following: (a) a first field view component based on the first view component or (b) a first complementary field view component pair including the first view component.

Document EP 2 544 447 A2 constitutes prior art under Article 54(3) EPC and may be construed to disclose a method of transmitting digital broadcasting content for providing 2D content or 3D content. The method includes: encoding content including at least one from among the 2D content and the 3D content and generating an elementary stream including encoded data of the content; generating service additional information including electronic program guide (EPG) information of the digital broadcasting content and inserting at least one, into the service additional information, from among 2D/3D content identification information representing a method of reproducing the 2D content or the 3D content, 2D/3D content link information representing a relationship between the 2D content and the 3D content, and EPG 3D reproduction information for reproducing an EPG screen, on which EPG information is displayed, in 3D; and multiplexing the elementary stream and the service additional information and then generating a transport stream.

### DISCLOSURE OF THE INVENTION

### TECHNICAL TASK

The present invention intends to solve the aforementioned problem. A technical task that the present invention intends to achieve is to provide a method of receiving a digital broadcasting signal and apparatus therefor enabling to display a 3D video to watch the 3D video in a plurality of viewpoints in a manner of receiving a digital broadcasting signal including a 3D video of multi-view without experiencing the aforementioned problem.

### TECHNICAL SOLUTION

According to the invention, there are provided a method, an apparatus and a computer-readable medium according to the independent claims. Developments are set forth in the dependent claims.

Preferably, a digital broadcasting signal receiving device includes a tuner configured to receive a digital broadcasting signal including a plurality of video streams implementing a multi-view 3D video and a signaling data, a signaling data processor configured to decode the digital broadcasting signal including an information table in which includes a multi-view 3D video information converting a video image of a plurality of the video streams into the multi-view 3D video, a decoder configured to decode a plurality of the video streams using the multi-view 3D video information, and a formatter configured to output video images of the decoded video streams as the multi-view 3D video.

Preferably, the digital broadcasting signal receiving device further includes a multi-view output control unit configured to display the multi-view 3D video output in consideration of a relative position of each viewpoint.

Preferably, the multi-view 3D video information of the digital broadcasting signal receiving device includes at least one selected from the group consisting of the number of viewpoint, a camera arrangement method, priority of each viewpoint, a viewing angle provided by the multi-view 3D video, distance between cameras, or an identifier of a different camera forming a 3D video together according to each viewpoint.

Preferably, the multi-view 3D video information of the digital broadcasting signal receiving device is included in the information table in a form of a descriptor.

Preferably, the priority of each viewpoint of the digital broadcasting signal receiving device filters a part of a plurality of the video streams according to the priority if the number of viewpoint capable of being displayed in a receiver is less than the number of viewpoints included in the digital broadcasting signal.

Preferably, a method of receiving a digital broadcasting signal includes the steps of receiving a digital broadcasting signal including a plurality of video streams implementing a multi-view 3D video and a signaling data, decoding the digital broadcasting signal including an information table in which includes a multi-view 3D video information converting a video image of a plurality of the video streams into the multi-view 3D video, decoding a plurality of the video streams using the multi-view 3D video information, and outputting video images of the decoded video streams as the multi-view 3D video.

Preferably, the multi-view 3D video information of the digital broadcasting signal receiving device is included in the information table in a form of a descriptor.

Preferably, the priority of each viewpoint of the digital broadcasting signal receiving device filters a part of a plurality of the video streams according to the priority if the number of viewpoint capable of being displayed in a receiver is less than the number of viewpoints included in the digital broadcasting signal.

Preferably, a method of receiving a digital broadcasting signal includes the steps of receiving a digital broadcasting signal including a plurality of video streams implementing a multi-view 3D video and a signaling data, decoding the digital broadcasting signal including an information table in which includes a multi-view 3D video information converting a video image of a plurality of the video streams into the multi-view 3D video, decoding a plurality of the video streams using the multi-view 3D video information, and outputting video images of the decoded video streams as the multi-view 3D video

Preferably, the method of receiving a digital broadcasting signal further includes the step of displaying the multi-view 3D video output in consideration of a relative position of each viewpoint.

Preferably, the multi-view 3D video information of the method of receiving a digital broadcasting signal includes at least one selected from the group consisting of the number of viewpoint, a camera arrangement method, priority of each viewpoint, a viewing angle provided by the multi-view 3D video, distance between cameras, or an identifier of a different camera forming a 3D video together according to each viewpoint.

Preferably, the multi-view 3D video information of the method of receiving a digital broadcasting signal is included in the information table in a form of a descriptor.

Preferably, the priority of each viewpoint of the method of receiving a digital broadcasting signal filters a part of a plurality of the video streams according to the priority if the number of viewpoint capable of being displayed in a receiver is less than the number of viewpoints included in the digital broadcasting signal.

### ADVANTAGEOUS EFFECTS

According to the present invention, a method of receiving a digital broadcasting signal and apparatus therefor has an effect as follows.

According to one embodiment of the present invention, a 3D video can be watched from a plurality of viewpoints in a digital broadcasting receiver.

According to one embodiment of the present invention, a producer may be able to reproduce a 3D effect intended by the producer in case of displaying a 3D video signal of multi-view in a digital broadcasting receiver.

According to one embodiment of the present invention, a user interface can be provided according to each viewpoint in case of displaying a 3D video signal of multi-view in a digital broadcasting receiver.

According to one embodiment of the present invention, each output screen may be able to output a fixed 3D viewpoint in a manner of designating the fixed 3D viewpoint or may be able to display a 3D viewpoint of which a user wants in a manner of selecting in a multi-view display.

### DESCRIPTION OF DRAWING

FIG. 1 is a diagram of a video element of a multi-view 3D video service according to one embodiment of the present invention;
FIG. 2 is a diagram of a type of camera arrangement to film a multi-view 3D video according to one embodiment of the present invention;
FIG. 3 is a diagram of a metadata for a multi-view 3D video service according to one embodiment of the present invention;
FIG. 4 is a diagram of a filming condition of a multi-view 3D video and a corresponding metadata according to one embodiment of the present invention;
FIG. 5 is a diagram of a method of signaling a multi-view 3D service using a PMT according to one embodiment of the present invention;
FIG. 6 is a diagram of detail information included in Multiview_descriptior according to one embodiment of the present invention;
FIG. 7 is a diagram of detail information included in Multiview_service_descriptor and Multiview_element_descriptor according to ne embodiment of the present invention;
FIG. 8 is a diagram of a multi-view video service signaling using an SDT according to one embodiment of the present invention;
FIG. 9 is a diagram of a service type included in an SDT according to one embodiment of the present invention;
FIG. 10 is a diagram of a component descriptor according to one embodiment of the present invention;
FIG. 11 is a diagram of stream_content and component_type to indicate a multi-view 3D video service in a DVB broadcasting system according to one embodiment of the present invention;
FIG. 12 is a diagram of a multi-view service descriptor according to one embodiment of the present invention;
FIG. 13 is a diagram of a signaling of a multi-view 3D video service and an additional service type using a TVCT according to one embodiment of the present invention;
FIG. 14 is a diagram of a multi-view 3D video service descriptor according to one embodiment of the present invention;
FIG. 15 is a diagram of an independent table to provide a multi-view 3D video service information according to one embodiment of the present invention;
FIG. 16 is a diagram of a floor plan of a single 3DTV display case according to one embodiment of the present invention;
FIG. 17 is a diagram of a floor plan of a multi-view 3DTV display case according to one embodiment of the present invention;
FIG. 18 is a flowchart of a case of receiving a multi-view 3D video service information using a multiview descriptor of a PMT according to one embodiment of the present invention;
FIG. 19 is a flowchart of a case of receiving a multi-view 3D video service information using a multiview service descriptor and a multiview element descriptor of a PMT according to one embodiment of the present invention;
FIG. 20 is a flowchart of a case of receiving a multi-view 3D video service information using a multiview descriptor of an SDT according to one embodiment of the present invention;
FIG 21 is a flowchart of a case of receiving a multi-view 3D video service information using a multiview descriptor of a TVCT according to one embodiment of the present invention;
FIG. 22 is a flowchart of a case of receiving a multi-view 3D video service information using a multiview event descriptor of an EIT according to one embodiment of the present invention;
FIG. 23 is a diagram of a multiview event descriptor according to one embodiment of the present invention;
FIG. 24 is a diagram of a 3D receiver providing a multi-view 3D video service according to one embodiment of the present invention;
FIG. 25 is a diagram of an environment of a multi-view 3D video service according to one embodiment of the present invention;
FIG. 26 is a diagram of a user interface to watch a multi-view 3D video according to one embodiment of the present invention;
FIG. 27 is a diagram of a user interface in accordance with a position of a user according to one embodiment of the present invention;
FIG. 28 is a diagram of a user interface designating a mapping between a position of a user and an output 3D viewpoint according to one embodiment of the present invention;
FIG. 29 is a diagram of a user interface of a keyword mode according to one embodiment of the present invention;
FIG. 30 is a diagram of mapping of a 3D viewpoint in accordance with each position in case that the 3D viewpoint provided by a program corresponds to 5 according to one embodiment of the present invention;
FIG. 31 is a diagram of a metadata and a 3D viewpoint in accordance with a position according to one embodiment of the present invention;
FIG. 32 is a diagram of a 3D receiver providing a multi-view video service according to one embodiment of the present invention.

### BEST MODE

Reference will now be made in detail to the preferred embodiments of the present invention, examples of which are illustrated in the accompanying drawings. Yet, the present invention may be non-limited or non-restricted by the embodiments.

Although terminologies used in the present specification are selected from general terminologies used currently and widely in consideration of functions, they may be changed in accordance with intentions of technicians engaged in the corresponding fields, customs, advents of new technologies and the like. Occasionally, some terminologies may be arbitrarily selected by the applicant(s). In this case, the meanings of the arbitrarily selected terminologies shall be described in the corresponding part of the detailed description of the specification. Therefore, terminologies used in the present specification need to be construed based on the substantial meanings of the corresponding terminologies and the overall matters disclosed in the present specification rather than construed as simple names of the terminologies.

The method of expression for a 3 dimensional video may include a stereoscopic technique considering two viewpoints and a multiple view image technique (or a multi-view technique) considering more than 3 viewpoints. Comparably, a conventional single view image technique may be called a monoscopic video technique.

The stereoscopic technique uses a pair of image, i.e., a left view image and a right view image obtained by photographing a same subject with a left camera and a right camera, which are away a certain distance from each other. The multi-view technique uses more than 3 images obtained by photographing with 3 or more cameras having a certain distance and angle.

In the following description, a multi-view 3D video may be able to provide a user with a 3D video in a variety of viewpoints in a manner of selecting 2 images included in the 3D video of each of the viewpoints among the aforementioned 3 or more images. This is called a 3D video service and can be used as a same meaning with a multiview service in the following description.

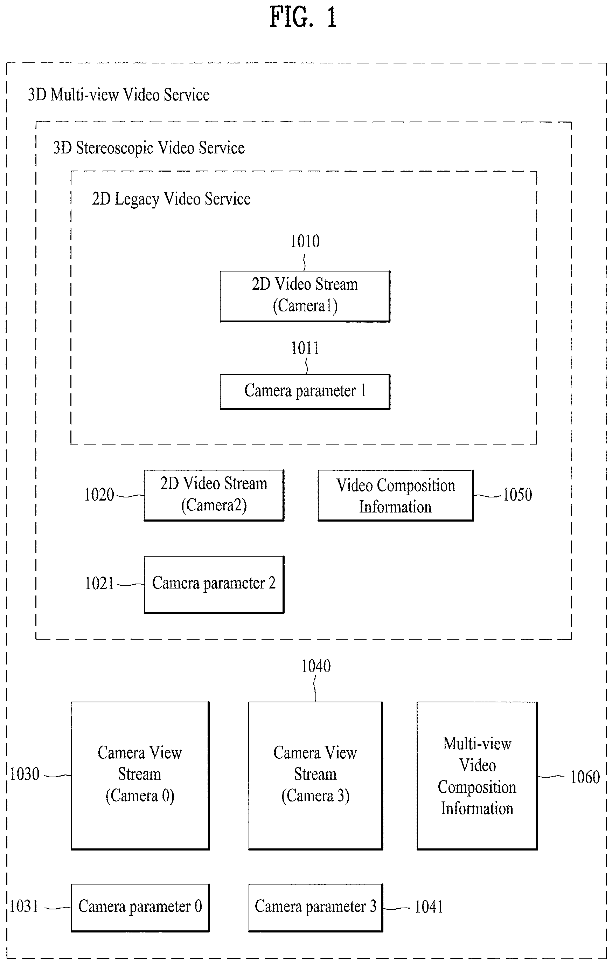

FIG. 1 is a diagram of a video element of a multi-view 3D video service according to one embodiment of the present invention.

Referring to FIG. 1, since each video stream corresponds to camera as one-to-one, a camera ID is assigned to each of the video streams. A 2D legacy video service includes one video stream by one camera 1010 and a 3D video service includes two video streams filmed by two cameras 1010/1020. A multi-view 3D video service includes four video streams filmed by 4 cameras 1010/1020/1030/1040. Although FIG. 1 shows an example of 4 cameras, the present invention may be non-limited to the number of camera of embodiment and may be applicable to a multi-view 3D service filmed by 3 or more cameras.

Referring to FIG. 1, each stream may include a camera parameter 1011/1021/1031/1041 according to each of the streams. Specifically, each of the streams may include an intrinsic and extrinsic camera parameter. The intrinsic camera parameter is information informing characteristic of the camera itself and may include information related to optical characteristics of a lens. And, the extrinsic camera parameter may include geometric position information on a practical or a virtual camera.

In FIG. 1, a 3D video service or a multi-view 3D video service includes a video configuration information 1050/1060, which corresponds to a metadata to combine each of the video streams into a 3D video, except the video streams. The video configuration information includes information for providing the 3D video service or the multi-view 3D video service using each of the streams. The informations included in the video configuration information shall be explained in detail in the following description.

In FIG. 1, a camera view stream belonging to the multiview service may correspond to a video image itself or the information on depth and the like.

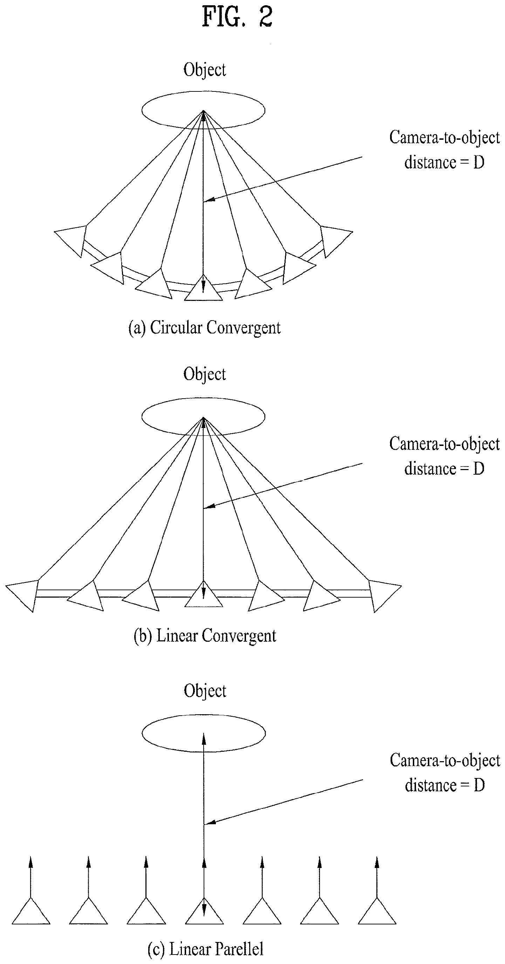

FIG. 2 is a diagram of a type of camera arrangement to film a multi-view 3D video according to one embodiment of the present invention.

FIG. 2(a) is a diagram of a type of circular convergent. In FIG. 2(a), each of triangles means individual cameras, respectively. An oval means an object. The type of circular convergent has a form that the cameras surround the object as its center. Camera-to-object distance, which is one of meta information for the multi-view 3D video service intended to provide to a receiving side by the present invention, means a distance between the filmed object and an image plane of a camera forming a video on the basis of a center of a plurality of camera arrangements. According to the type of circular convergent, camera-to-object distance values of all cameras are identical.

FIG. 2(b) is a diagram of a type of linear convergent. Each camera is linearly arranged and takes a picture of the object in a manner of controlling an angle of coverage to the object at the position of each of the cameras. The camera-to-object distance is defined as a distance between an image plane of a central camera and the object. The distance from a different camera to the object can be calculated from the above camera-to-object distance and a distance from each camera to the central camera.

FIG. 2(c) is a diagram of a type of linear parallel. Each camera is linearly arranged and takes a picture of a front at the position of each of the cameras. Unlike the type of linear convergent, the type of linear parallel does not control the angle of coverage to the object.

The images taken from the cameras of different positions according to each of the aforementioned types require an additional metadata to be combined into a multi-view 3D video by a receiver.

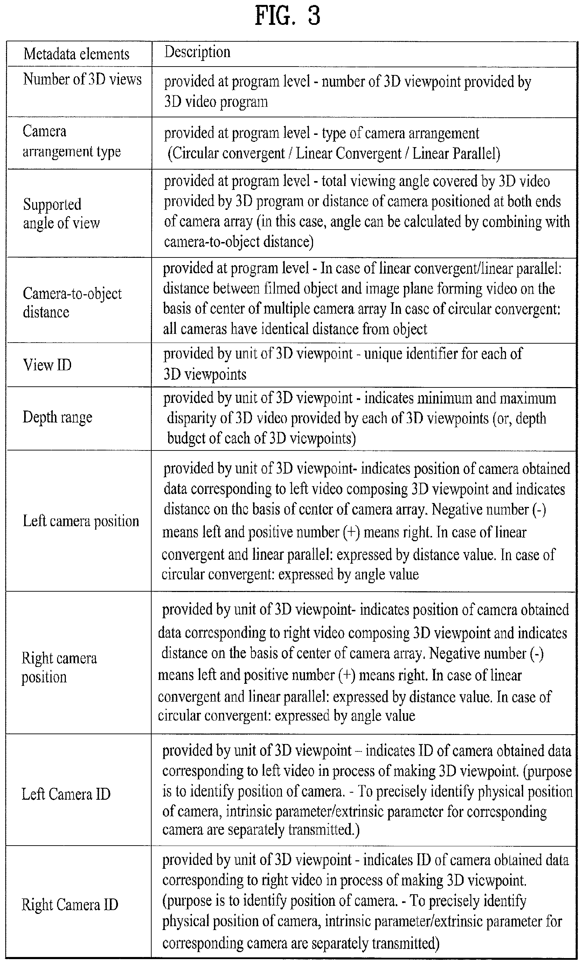

FIG. 3 is a diagram of a metadata for a multi-view 3D video service according to one embodiment of the present invention. Detail content is as follows.

Number of 3D views is provided at a program level and means the number of 3D viewpoint provided by a 3D video program. Camera arrangement type is provided at the program level and indicates the type of camera arrangement described in FIG. 2. As mentioned earlier, there exist the circular convergent type, the linear convergent type, and the linear parallel type.

Supported angle of view is provided at the program level and indicates a total viewing angle covered by a 3D video provided by a 3D video program or distance information of the camera positioned at the both ends of a camera arrangement. In case of the latter, the total viewing angle can be calculated by combining with a value of the camera-to-object distance. In order to distinguish this two, a supported angle of view type can be added to the metadata.

Camera-to-object distance is provided at the program level. In case of such a camera arrangement as the type of linear convergent and the type of linear parallel, the camera-to-object distance indicates a distance between the filmed object and an image plane of a central camera forming a video of a plurality of camera arrangements. In case of the camera arrangement such as the type of circular convergent, all cameras have an identical distance from the object.

View ID is provided by a unit of 3D viewpoint and indicates a unique identifier for each of the 3D viewpoints.

Depth range is provided by a unit of 3D viewpoint and indicates a minimum and maximum disparity of a 3D video provided by each of the 3D viewpoints. Or, the depth range indicates a depth budget of each of the 3D viewpoints.

Left camera position is provided by a unit of 3D viewpoint and indicates a position of a camera obtained a data corresponding to a left video included in the 3D viewpoint and indicates a distance or an angle on the basis of a center of a camera arrangement. In this case, a negative number (-) means that the camera is positioned in the left of the center and a positive number (+) means that the camera is positioned in the right of the center. In case of such a camera arrangement as the type of linear convergent and the type of linear parallel, the left camera position is expressed by a distance value. In case of the camera arrangement such as the type of circular convergent, the left camera position is expressed by an angle value.

Right camera position is provided by a unit of 3D viewpoint and indicates a position of a camera obtained a data corresponding to a right video included in the 3D viewpoint and indicates a distance or an angle on the basis of a center of a camera arrangement. In this case, a negative number (-) means that the camera is positioned in the left of the center and a positive number (+) means that the camera is positioned in the right of the center. In case of such a camera arrangement as the type of linear convergent and the type of linear parallel, the right camera position is expressed by a distance value. In case of the camera arrangement such as the type of circular convergent, the right camera position is expressed by an angle value.

Left camera ID is provided by a unit of 3D viewpoint and means an identifier (ID) of a camera obtained a data corresponding to a left video in the process of making the 3D viewpoint. A purpose of the left camera ID is to identify a position of a camera. As described in FIG 1, in order to precisely identify a physical position of the camera, an intrinsic parameter and extrinsic parameter for the corresponding camera are separately transmitted.

Right camera ID is provided by a unit of 3D viewpoint and means an identifier (ID) of a camera obtained a data corresponding to a right video in the process of making the 3D viewpoint. A purpose of the right camera ID is to identify a position of a camera. As described in FIG 1, in order to precisely identify a physical position of the camera, an intrinsic parameter and extrinsic parameter for the corresponding camera are separately transmitted.

An example of a practical camera arrangement for the aforementioned metadata is as follows.

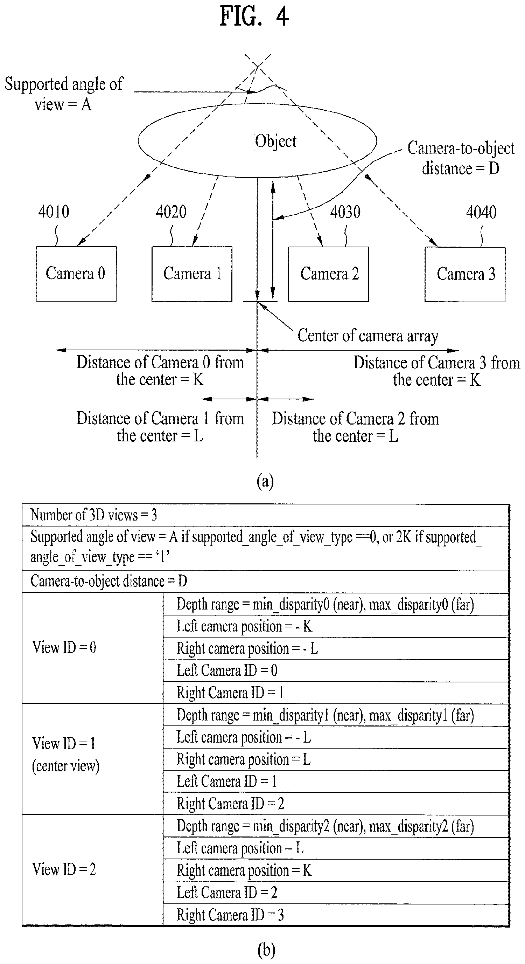

FIG 4 is a diagram of a filming condition of a multi-view 3D video and a corresponding metadata according to one embodiment of the present invention.

FIG 4 (a) indicates values of each metadata according to the filming condition of the multi-view 3D video. 4 cameras take a picture of an identical object and each of the cameras can be expressed as a camera 0 4010, a camera 1 4020, a camera 2 4030, and a camera 3 4040.

Supported angle of view is determined by an angle formed by the camera 0 4010, the camera 3 4040 positioned at the both ends of a camera arrangement and the object. In the diagram, this value is expressed by 'A'. This value can also be expressed by a distance between the cameras positioned at the both ends of the camera arrangement. Center of camera array is determined by a center position between the camera 1 4020 and the camera 2 4030 positioned at the center. A distance from the center of camera array to the object can be determined as the camera-to-object distance. In the diagram, this value is expressed as 'D'. And, if there exist odd number of cameras, the camera-to-object distance is determined by a distance between the object and an image plane of a camera positioned at the middle of the camera arrangement.

A position of each camera can be expressed by a distance from the center of camera array to each of the camera. Hence, the camera 0 4010 and the camera 3 4040 have a value of `K' and the camera 1 4020 and the camera 2 4030 have a value of 'L'.

FIG 4 (b) is an example of metadata value for the aforementioned filming condition.

In case of using 4 cameras, Number of 3D views has 3 values. In particular, since each viewpoint needs a video taken by two cameras to apply a binocular disparity, each of the viewpoints is provided by the camera 0 4010 and the camera 1 4020, the camera 1 4020 and the camera 2 4030, and the camera 2 4030 and the camera 3 4040, respectively. This shall be described in the following description according to each of the viewpoints.

In case that supported angle of view type has a value of '0', supported angle of view is expressed by an angle value. In this case, the supported angle of view has a value of 'A' in FIG. 4 (a). In case that supported angle of view type has a value of '1', the supported angle of view is expressed by a distance value. In this case, the supported angle of view has a value of '2K', which corresponds to a distance value between cameras positioned at both ends, respectively.

Camera-to-object distance is determined by 'D' value, which corresponds to a distance from a center of the camera arrangement to the object.

In the following description, information on the metadata according to each viewpoint is described. An identifier (view ID) for a viewpoint has values of 0, 1, and 2 from the left viewpoint. Information on each of the viewpoints includes a depth range, position of left/right cameras, and information on the identifiers of the left/right cameras.

Referring to view ID 0, the depth range includes min_disparity0 value indicating a minimum disparity and max_disparity0 value indicating a maximum disparity. Since the view ID 0 is a viewpoint including the camera 0 4010 and the camera 1 4020, a left camera position value corresponds to - K, which is a position of the camera 0. In this case, a negative number expression means that the corresponding camera is positioned at the left of the center of the camera arrangement. Right camera position value has a value of - L, which is a position of the camera 1. Left camera ID has a value of '0' corresponding to the ID of the camera 0 and right camera ID has a value of'1' corresponding to the ID of the camera 1.

Referring to view ID 1, the depth range includes min_disparity1 value indicating a minimum disparity and max_disparity1 value indicating a maximum disparity. Since the view ID 1 is a center viewpoint and a viewpoint including the camera 1 4020 and the camera 2 4030, a left camera position value corresponds to - L, which is a position of the camera 1. Right camera position value has a value of L, which is a position of the camera 2. In this case, a positive number expression means that the corresponding camera is positioned at the right of the center of the camera arrangement. Left camera ID has a value of '1' corresponding to the ID of the camera 1 and right camera ID has a value of '2' corresponding to the ID of the camera 2.

Referring to view ID 2, the depth range includes min_disparity2 value indicating a minimum disparity and max_disparity2 value indicating a maximum disparity. Since the view ID 2 is a viewpoint including the camera 2 4030 and the camera 3 4040, a left camera position value corresponds to L, which is a position of the camera 2. Right camera position value has a value of K, which is a position of the camera 3. Left camera ID has a value of '2' corresponding to the ID of the camera 2 and right camera ID has a value of '3' corresponding to the ID of the camera 3.

It is possible to provide the information on the filming condition for a multi-view 3D video service using the aforementioned metadata.

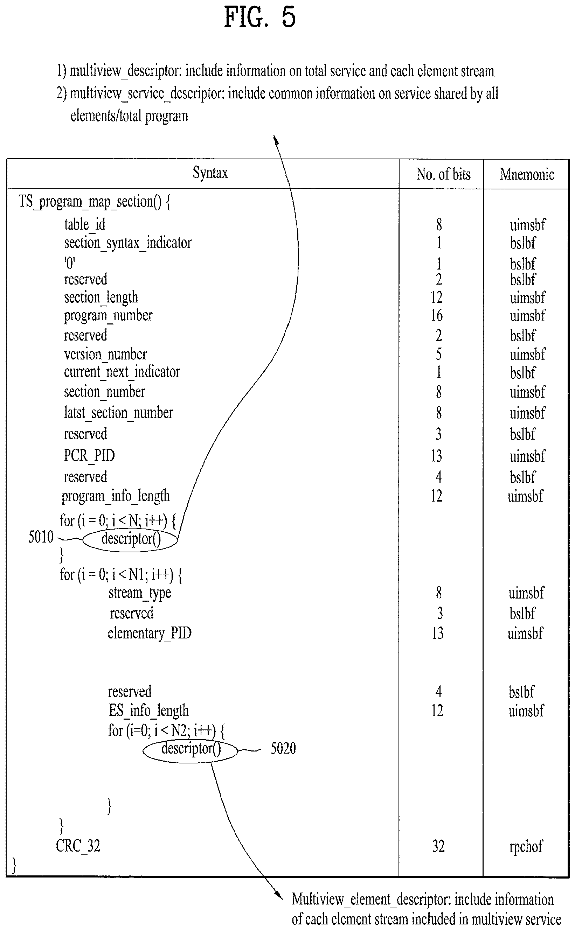

FIG. 5 is a diagram of a method of signaling a multi-view 3D service using a PMT according to one embodiment of the present invention. The aforementioned metadata for the multi-view 3D video service can be included in a program map table (PMT) in a descriptor form.

The PMT includes the following.

The table_id field is 8 bit field and TS_program_map_section is always set to a value oaf '0* 02'.

The section_syntax_indicator field is 1 bit field and is set to '1'.

The section_length field consists of 12 bits and first two bits are corresponding to '00'. This field indicates the number of bytes of a section and indicates a length from the right after this field to a CRC. The value of this field is not greater than 1021.

The program_number field consists of 16 bits. This field indicates a program to which the program_map_PID is applicable. One program definition is transmitted by one TS_program_map_section only. This connotes that the program definition is not greater than 1016.

The version_number field consists of 5 bits and indicates a version of a virtual channel. A version value increases by '1' on every change in a VCT. If the version value reaches '31', the next version value becomes '0'. The value of this field should be a same value of the same field of the MGT.

The current_next_indicator field consists of 1 bit. In case that the VCT is currently applicable, the value is set to '1'. If the value is set to '0', it means that the VCT is not applicable yet and the next table is valid.

The section_number field is set to '0 * 00'.

The last_section_number field is set to '0 * 00'.

The PCR_PID field consists of 13 bits. This field means a PID of TS including a PCR field, which is valid for a program mentioned by a program number.

The program_info_length field may consist of 12 bits and first two bits are corresponding to '00' value. The rest of 10 bits express a descriptor, which follows this field, as the number of bytes.

The stream_type field may consist of 8 bits and indicate a type of program element transmitted by a packet having a PID value of a basic PID.

The elementary_PID field may consist of 13 bits and indicate a PID of TS including a related program element.

The ES_info_length field may consist of 12 bits and first two bits are corresponding to '00'. The rest of 10 bits express a descriptor of a related program element, which follows this field, as the number of bytes.

The CRC_32 field indicates a CRC value making a register in a decoder to be zero output.

A method of including metadata for a multi-view 3D video service in the aforementioned PMT can be classified into 2 ways.

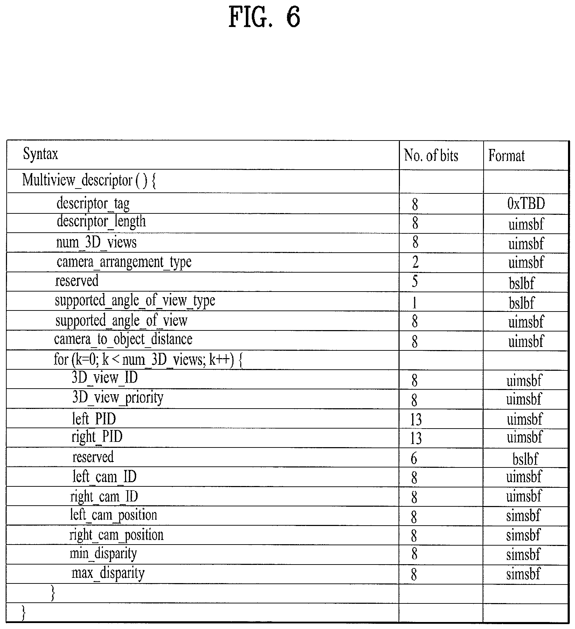

One is a method of using one descriptor. In the following description, this is called a multiview _descriptor. The multiview_descriptor is situated at a position of a descriptor 5010 right after the program_info_length field in the PMT and includes information on a corresponding program. The multiview_descriptor may be able to include information on a whole of a service and each element stream. A broadcasting receiving side may be able to recognize whether a multi-view 3D video service is provided by checking the existence of the multiview_descriptor. Detail information included in the multiview_descriptor shall be described in FIG 6.

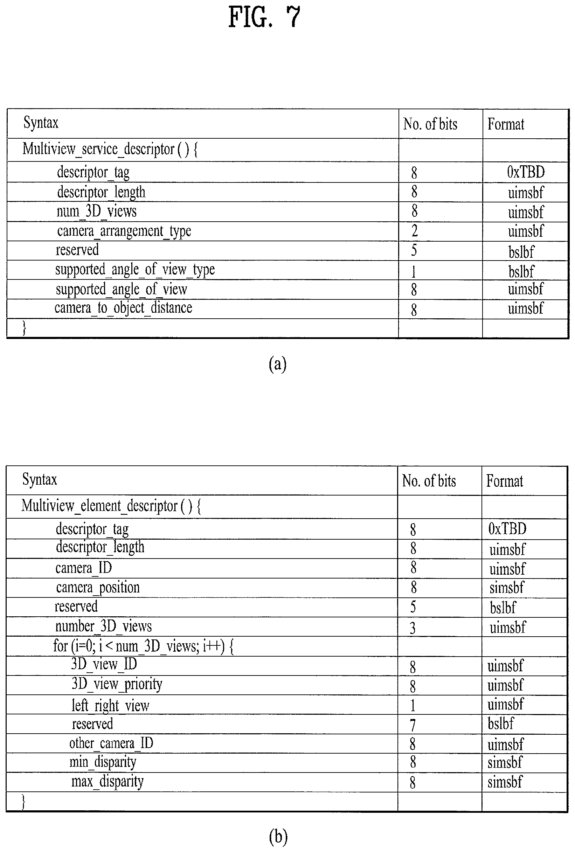

Another is a method of using 2 descriptors. In the following description, these are called a multiview_service_descriptor and a multiview_element_descriptor, respectively. The multiview_service_descriptor may be able to include a common information on a service shared by all elements or a whole of a service and may be situated at a position of first descriptor 5010 in the PMT table. The multiview_element_descriptor may include the information on each element stream included in a multi-view 3D video service and may be situated at a position of a second descriptor 5020 in the PMT table. Detail information included in the multiview_service_descriptor and the multiview_element_descriptor shall be described in FIG 7.

FIG 6 is a diagram of detail information included in Multiview_descriptior according to one embodiment of the present invention. The multiview_descriptor may include each 3D viewpoint included in a multi-view 3D video program in the PMT or information on common characteristics of a whole of the multi-view 3D video service. This means a descriptor of a program or a service level. Hence, the multiview_descriptor can be effectively used in case that a plurality of streams are simultaneously received and then displayed at once. And, in case that only one stream information is known, the multiview_descriptor enables to recognize whether the stream is included in which 3D viewpoints.

The descriptor_tag is 8 bit field and identifies a type of a descriptor. The multiview_descriptor of the present invention has a value of '0 * TBD'.

The descriptor_length is 8 bit counter and expresses the number of byte right after the descriptor_length field.

The num_3D_views is 8 bit field and means a total number of a 3D viewpoint provided by a multi-view 3D video program.

The camera_arrangement_type is 2 bit field and expresses a kind of arrangement of a plurality of cameras in a corresponding multi-view program. If a corresponding value is `00', '01', '10', and '11', the camera_arrangement_type may be able to express a circular convergent type, a linear convergent type, a linear parallel type, and other type, respectively.

The supported_angle_of_view_type is 1 bit field and expresses a form of expression of the supported_angle_of_view field. If a corresponding value is '0', it means that the supported_angle_of_view is expressed by an angle unit and if a corresponding value is '1', it means that the supported_angle_of_view is expressed by a distance unit.

The supported_angle_of_view is 8 bit field and indicates a whole of viewing angle covered by a 3D video provided by a corresponding multi-view 3D video program or information on a distance between the cameras positioned at both ends of a camera arrangement. In case of the latter, the whole of viewing angle can be calculated by combining a value of a camera_to_object_distance in the following. If a value of the supported_angle_of_view is '0', it means a viewing angle and if the value of the supported_angle_of_view is '1', it means a distance from the cameras of both ends of a camera arrangement to a center point.

The camera_to_object_distance is 8 bit field and means a distance between an image plane forming a video and a filmed object on the basis of a center of a multi-view camera arrangement. In case of such a camera arrangement as the linear convergent type or the linear parallel type, the camera_to_object_distance means the distance between the image plane forming a video of a center camera of a plurality of camera arrangements and the filmed object. In case of the camera arrangement such as the circular convergent type, all cameras have an identical distance from the object.

The following fields correspond to the information provided to each viewpoint of a multi-view 3D video service via a for-loop.

The 3D_view_ID is provided by a unit of 3D viewpoint and is 8 bit field. This field indicates a unique identifier making each 3D viewpoint to be identified in a program level.

The 3D-view_priority is provided by a unit of 3D viewpoint and is 8 bit field. This field indicates priority of each viewpoint. If the number of viewpoint (num_3D_views) provided by a multi-view 3D video service is greater than the number of viewpoint capable of being displayed in a receiver, the 3D-view_priority may be able to provide information on which viewpoint is preferentially displayed among a plurality of the viewpoints.

The left_PID is provided by a unit of 3D viewpoint and is 13 bit field. The left_PID means a PID of a left video included in a corresponding 3D viewpoint.

The right_PID is provided by a unit of 3D viewpoint and is 13 bit field. The right_PID means a PID of a right video included in a corresponding 3D viewpoint.

The left_cam_ID is provided by a unit of 3D viewpoint and is 8 bit field. The left_cam_ID means an identifier (ID) of a camera obtained a data of an elementary stream corresponding to a left video in a process of making a corresponding 3D viewpoint.

The right_cam_ID is provided by a unit of 3D viewpoint and is 8 bit field. The right_cam_ID means an identifier (ID) of a camera obtained a data of an elementary stream corresponding to a right video in a process of making a corresponding 3D viewpoint.

The left_cam_position is provided by a unit of 3D viewpoint and is 8 bit field. The left_cam_position indicates a position of a camera obtained data corresponding to a left video included in a corresponding 3D viewpoint and indicates a distance or angle on the basis of a center of a camera arrangement.

The right_cam_position is provided by a unit of 3D viewpoint and is 8 bit field. The right_cam_position indicates a position of a camera obtained data corresponding to a right video included in a corresponding 3D viewpoint and indicates a distance or angle on the basis of a center of a camera arrangement.

In this case, a negative number (-) means that a camera is positioned at a left of the center and a positive number (+) means that a camera is positioned at a right of the center. According to each camera_arrangement_type, in case of such a camera arrangement as the linear convergent type and the linear parallel type, a relative position from the center of the camera arrangement is expressed by a distance value. In case of the camera arrangement such as the circular convergent type, the relative position from the center of the camera arrangement is expressed by a relative angle value. As mentioned earlier, if the number of cameras used for the camera arrangement corresponds to an add number, it is able to express the relative position on the basis of the camera positioned at the center of the camera arrangement.

The min_disparity is provided by a unit of 3D viewpoint and is 8 bit field. The min_disparity means a depth budget (depth range) of each 3D viewpoint. In particular, it indicates a minimum disparity value provided by a corresponding 3D viewpoint.

The max_disparity is provided by a unit of 3D viewpoint and is 8 bit field. The max_disparity means a depth budget (depth range) of each 3D viewpoint. In particular, it indicates a maximum disparity value provided by a corresponding 3D viewpoint.

FIG. 7 is a diagram of detail information included in Multiview_service_descriptor and Multiview_element_descriptor according to ne embodiment of the present invention.

FIG. 7 (a) is a diagram of the Multiview_service_descriptor providing common information of a multi-view 3D video service.

The multiview_service_descriptor includes information on the descriptor_tag, the descriptor_length, the num_3D_views, the camera_arrangement_type, the supported_angle_of_view_type, the supported_angle_of_view, the camera_to_object_distance.

Explanation on each field is identical to the content explained on the multiview_descriptor in FIG. 6.

FIG. 7 (b) is a diagram of the multiview_element_descriptor providing information on each element stream of a multi-view 3D video service. The multiview_element_descriptor includes detail information on each element stream.

The multiview_element_descriptor includes information on the descriptor_tag, the descriptor_length, the camera_ID, the camera_position, the number_3D_views, the 3D_view_ID, the 3D_view_priority, the left_right_view, the other_camera_ID, the min_disparity, the max_disparity.

The camera_ID is 8 bit field and an identifier (ID) identifying a camera used to obtain a data of a corresponding element stream.

The camera_position is 8 bit field and indicates a position of a camera used to obtain a data of a corresponding element stream. A negative number (-) means a left and a positive number (+) means a right on the basis of a camera positioned at the center of a camera arrangement. In case that the camera arrangement is arranged according to a circumference, the camera_position indicates a relative angle value on the basis of the camera positioned at the center of the camera arrangement. In case that the camera arrangement is arranged on a straight line, the camera_position indicates a relative position value on the basis of the camera positioned at the center. In case that the number of camera corresponds to even number, the center of the arranged cameras becomes a criterion.

The number_3D_views is 3 bit field and indicates the number of 3D viewpoint including a corresponding element stream. The number_3D_views may have different value according to each element stream. For instance, in FIG. 4 (b), if the camera_id corresponds to '1', the corresponding stream can be included in two 3D viewpoints, i.e., the view ID 0 and the view ID 1. In this case, the value of the number_3D_views indicates '2'.

The 3D_view_ID is 8 bit field and indicates an identifier of a 3D viewpoint to which a corresponding element stream is belonged. It is possible to know that the corresponding element stream is included in which 3D viewpoint by this field.

The 3D_view_priority is 8 bit field and may be able to specify the priority of the 3D viewpoint to which a corresponding element stream is belonged. As described in FIG. 6, this value can be used to determine which viewpoint is preferentially displayed in case that the number of viewpoint capable of being displayed by a receiver is limited.

The left_right_view is 1 bit field and indicates whether a corresponding element stream is included in a left video or a right video in a current 3D viewpoint to which the corresponding element stream is belonged. In case that this field has a value of '0', it indicates the left video. In case that this field has a value of '1', it indicates the right video.

The other_camera_ID is 8 bit field and indicates an identifier of a camera used to obtain a data of an element stream making a pair with a current element stream to generate a corresponding 3D viewpoint. Since this field plays a role in distinguishing a different element stream, it is possible to replace this field with a value of a PID, a camera position, or the like.

The min_disparity and the max_disparity are 8 bit fields, respectively. These fields indicate a depth budget (depth range) of each 3D viewpoint. In particular, these fields may mean a minimum/maximum disparity of a 3D video provided by the each 3D viewpoint.

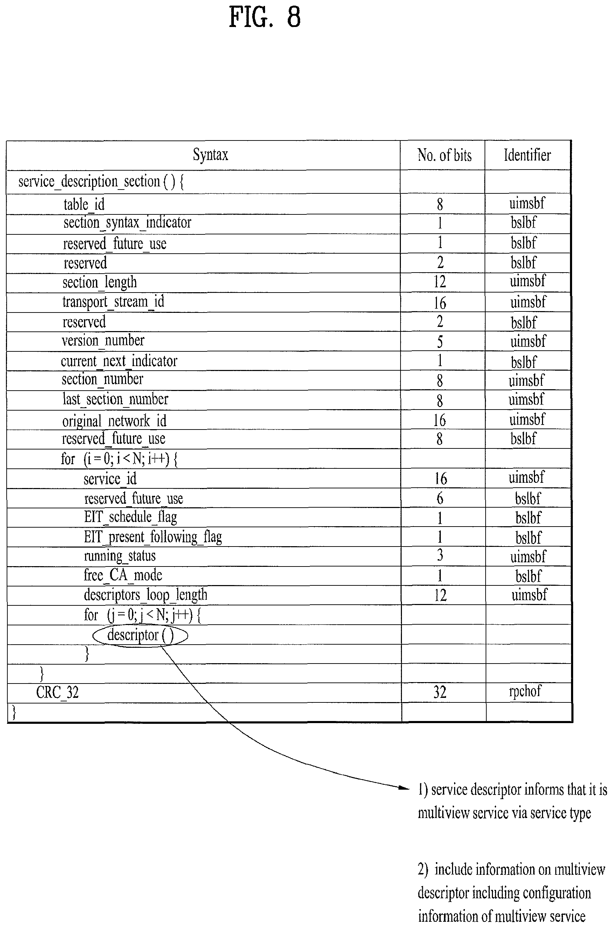

FIG. 8 is a diagram of a multi-view video service signaling using an SDT according to one embodiment of the present invention.

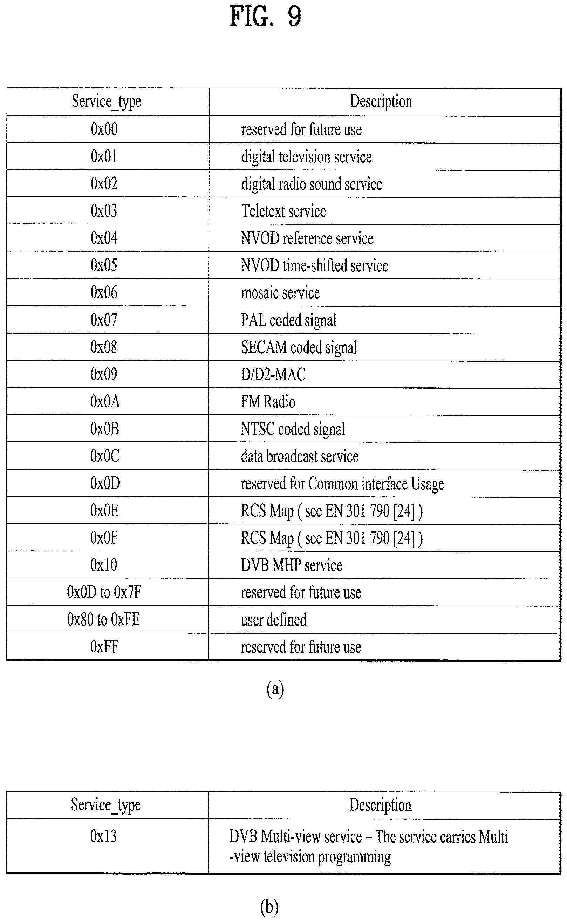

The SDT (service description table) is a table explaining services included in a specific transport stream in DVB-SI. It is possible to inform a receiver that a corresponding service is a multi-view 3D video service via a service_type in a service descriptor included in a descriptor of the SDT. The service_type shall be described in detail in FIG. 9.

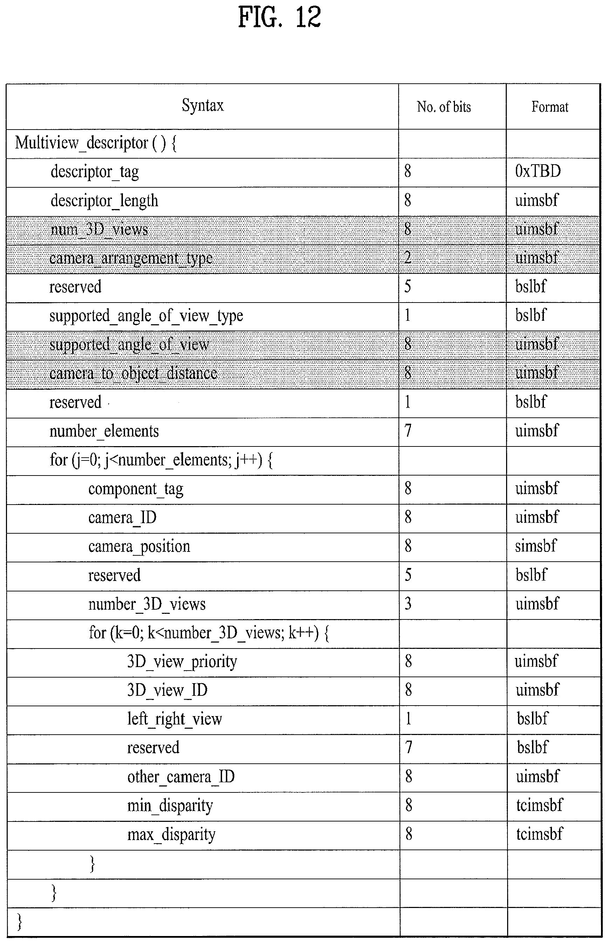

And, it is possible to deliver the information on the multi-view 3D video service to the receiver in a manner of including the information on the descriptor containing information on the multi-view service in the descriptor of the SDT. In the following description, this descriptor is called a multiview _descriptor and the information included in the multiview_descriptor shall be described in FIG 12.

Each field included in the STD is defined as follows.

The table_id field is 8 bit field and indicates that this section belongs to a service description table.

The section_syntax_indicator is 1 bit field and is set to '1'.

The section_length is 12 bit field and first two bits of the section_length are set to '00'. This field indicates the number of bytes of a section from right after this field to CRC. This field cannot be greater than 1021 and a total length of the section becomes maximum 1024 bytes.

The transport_stream_id is 16 bit field and plays a label role of distinguishing a transport stream (TS).

The version_number is 5 bit field and indicates a version number of a sub_table. A version number increases by '1' on every change in the sub_table. If the version value reaches '31', the next version value becomes '0'.

The current_next_indicator is 1 bit field. In case that the sub_table is currently applicable, the current_next_indicator field is set to '1'. If it is set to '0', it means that the sub_table is not applicable yet and the next table is valid.

The section_number is 8 bit field. The section_number field indicates the number of a section. First section may have a value of '0 * 00'. The value increases by '1' on every additional section having a same table_id, transport_stream_id, and original_network_id.

The last_section_number is 8 bit field and indicates the number of the last section (in particular, the highest section_number) of a corresponding sub_table, which includes this section as a part.

The original_network_id is 16 bit field and is a label for checking a network_id of a transport system.

The service_id is 16 bit field and plays a label role of distinguishing a service from a different service included in the TS. This field is same with the program_number field of the program_map_section.

The EIT_schedule_flag is 1 bit field. If the EIT_schedule_flag field is set to '1', it may indicate that EIT schedule information for a corresponding service is included in current TS. If the field is set to '0', it may indicate that the EIT schedule information is not included in the TS.

The EIT_present_following_flag is 1 bit field. If the EIT_present_following_flag field is set to '1', it may indicate that EIT_present_following information for a corresponding service is included in current TS. If the field is set to '0', it may indicate that the EIT_present_following information is not included in the TS.

The running_status is 3 bit field and indicates a service status.

The free_CA_mode is 1 bit field. If the free CA mode field is set to '0', it indicates that all element streams of a corresponding service are not scrambled. If the field is set to '0', it means that one or more streams are controlled by a CA system.

The descriptor_loop_length is 12 bit field and indicates a total length of a following descriptor as byte unit.

The descriptor may include the descriptor for a service and may be able to include the service_type and the multiview_descriptor of the present invention aforementioned in the foregoing description.

The CRC_32 is 32 bit field and indicates a CRC value making a register in a decoder to be zero output.

FIG. 9 is a diagram of a service type included in an SDT according to one embodiment of the present invention.

FIG. 9 (a) is a diagram of a value of a legacy service type (service_type). The service_type may be able to indicate a kind of service supportable by DVB.

As shown in FIG. 9 (b), the present invention defines such a new service type as a Stereoscopic Multi-view Service to support a multi-view 3D video service. The value of the service_type is included in the Service Descriptor of the DVB and may be then able to be included in the aforementioned Descriptor Loop of the SDT in FIG. 8.

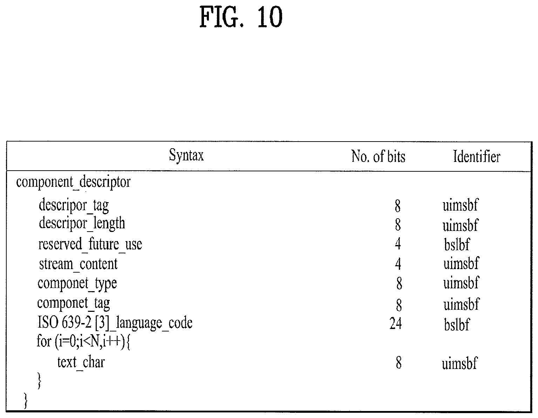

FIG. 10 is a diagram of a component descriptor according to one embodiment of the present invention.

In order to indicate a type of each elementary stream generating a service, the DVB signals in a manner of adding a component descriptor as shown in FIG. 10 to the descriptor loop of the SDT.

The stream_content is 4 bit field and distinguishes a kind of stream. For instance, a video, an audio, EBU-data, or the like can be included.

The component_type is 8 bit field and describes each of video, audio, and EBU-data components.

The component_tag is 8 bit field and has a same value with the component_tag field of a stream identifier descriptor for a component stream.

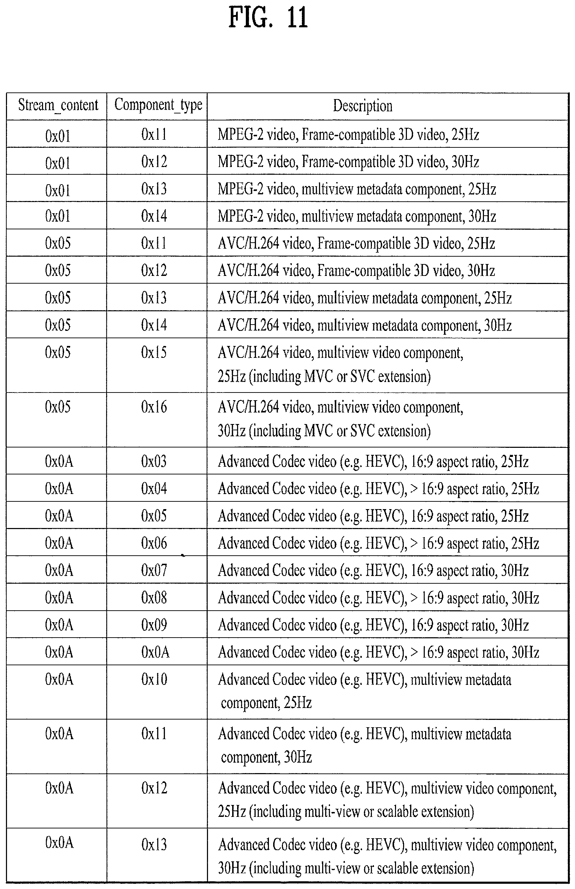

The present invention may be able to define a stream_content and a component_type as shown in FIG. 11 to distinguish each of 3D viewpoints for the Stereoscopic Multi-view Service, which corresponds to a multi-view 3D video service.

FIG. 11 is a diagram of stream-content and component_type to indicate a multi-view 3D video service in a DVB broadcasting system according to one embodiment of the present invention.

Various elementary streams constructing a multi-view 3D video service can be signaled using the stream_content and the component_type field. A field value assignment in FIG. 11 follows a rule described in the following description.

Regarding a codec division, a legacy MPEG-2 video or a H.264/AVC video codec can be used. In case of using a codec providing a more enhanced performance, e.g., a HEVC and the like, this can be signaled using the stream_content field.

Regarding a type of component division, the type of stream obtained from each camera may include a video and a metadata such as a depth map. And, the video may include a stream capable of using a codec corresponding to a base layer or a stream coded by an enhancement layer (in case of the H.264/AVC, MVC or SVC extension), which should perform an inter-view prediction from the base layer. To this end, the type of corresponding stream is signaled using the component_type. The classification for each type is as follows.

The multiview metadata component means a stream resulted from compressing a non-image data such as the depth map using a video codec.

The multiview video component means a video data. Specifically, a video belongs to not a base view but an enhancement view. The multiview video component means a stream requiring a restoration via an inter-view, an interlayer prediction, or the like. A frame rate or an aspect ratio of a corresponding component follows a property of a video component of a corresponding base view.

Other video component types mean video component streams corresponding to the base view. Information on a basic aspect ratio, frame rate and the like is included in this component type and 2D service is signaled using this component type in case of providing the 2D service.

FIG. 12 is a diagram of a multi-view service descriptor according to one embodiment of the present invention.

As described in FIG. 8, the multiview descriptor is situated at the position of descriptor right after a descriptors_loop_length field in the SDT and may include common information on a multi-view 3D video service and the information on each elementary stream to which belongs to the common information.

The multiview descriptor may include the descriptor_tag, the descriptor_length, the num_3D_views, the camera_arrangement_type, the supported_angle_of_view_type, the supported_angle_of_view, the camera_to_object_distance, the number_elements, the component_tag, the camera_ID, the camera_position, the number_3D_views, the 3D_view_priority, the 3D_view_ID, the left_right_view, the other_camera_ID, the min_disparity, the max_disparity.

The fields included in the multiview descriptor are explained in FIG. 7. The content not explained in FIG. 7 is additionally explained in the following description.

The component_tag is used to indicate a connection relationship between the component descriptor and an ES (elementary stream) on an ES_loop of the PMT. It is able to indicate the connection relationship between the component descriptor in the SDT and a 3D_complementary_video_descriptor_SDT in a manner of having an identical value in the component_tag field in the stream identifier descriptor by the ES_loop descriptor of the PMT.

In the multiview descriptor, each element may include a plurality of informations via a loop and information on a plurality of 3D views capable of being generated is provided to each of the elements via the loop. In this case, priority between the 3D views can be specified by the 3D_view_priority field. If it corresponds to a scenario that a receiver directly decides the priority of the 3D view capable of being generated in consideration of information on camera position, the 3D_view_priority field can be omitted.

In case of being separately provided a camera descriptor, the camera_pos field is provided information from the descriptor. It is possible to omit this field at this time. Since the camera_ID and the other_camera_ID field can be used to identify an element stream, the camera_ID and the other_camera_ID field may replace the PID.

By transmitting the multi view descriptor in a manner of being included in the SDT, the receiver may be able to provide a multi-view 3D video service using the multi view descriptor.

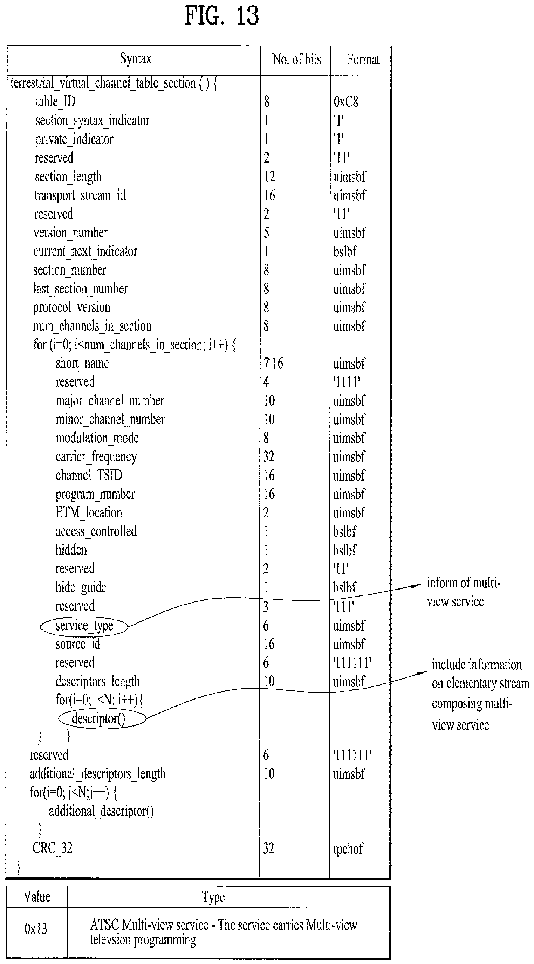

FIG 13 is a diagram of a signaling of a multi-view 3D video service and an additional service type using a TVCT according to one embodiment of the present invention.

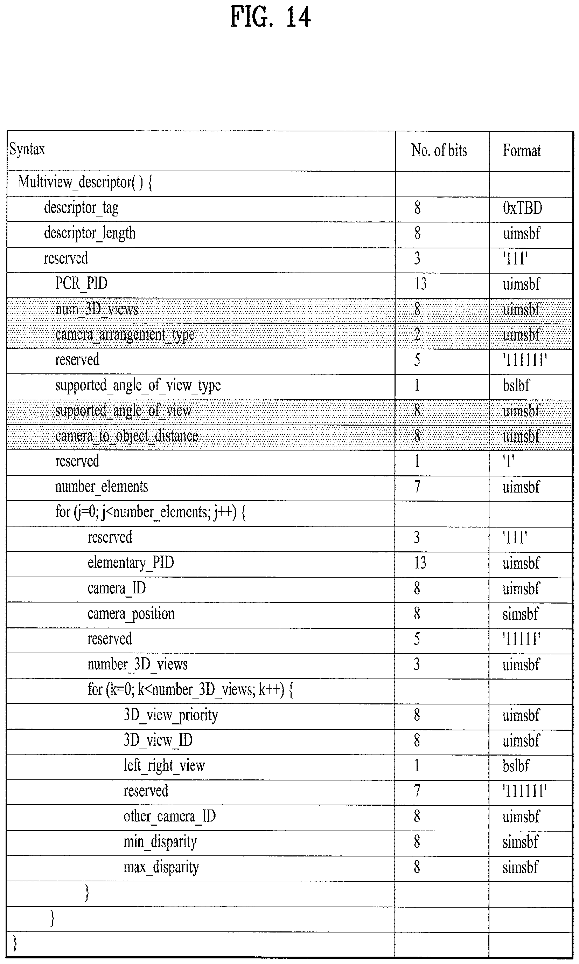

TVCT (terrestrial virtual channel table) is a table including the property of virtual channels included in a transport stream in PSIP of ATSC. In order to signal the information for the multi-view 3D video service, a service_type field and a multiview_descriptor() can be transmitted in a manner of being included in the TVCT. Detail content of the multiview_descriptor() included in the TVCT shall be described in FIG. 14.

The content included in the TVCT is as follows.

The table_id field indicates a type of a table section. For instance, in order to indicate the TVCT, its value should be '0 * C8'.

The section_syntax_indicator field is configured with 1 bit and its value is fixed to '1'.

The private_indicator field is set to '1'.

The section_length field consists of 12 bits and first two bits correspond to '00'. This field indicates the number of bytes of a section and indicates a length from the right after this field to a CRC. The value of this field cannot be greater than 1021.

The transport_stream_id field is configured with 16 bits and it is a MPEG-2 transport stream (TS) ID. It is possible to distinguish from a different TVCT by this field.

The version_number field indicates a version of a virtual channel. A version value increases by '1' on every change in a VCT. If the version value reaches '31', the next version value becomes '0'. The value of this field should be a same value of the same field of the MGT.

The current_next_indicator field is configured with 1 bit. In case that the VCT is currently applicable, the value is set to '1'. If the value is set to '0', it means that the VCT is not applicable yet and the next table is valid.

The section_number field indicates the number of section. The value of the first section of the TVCT is '0 * 00' and increases by '1' on every additional section.

The last_section_number field means the number of the last section. In particular, it means the number of section having a highest section_number in the total of the TVCT.

The protocol_version field plays a role of permitting a kind of table different from the table defined by the current protocol in the future. '0' is the only valid value in the current protocol. The value except '0' shall be used in a later version for a structurally different table.

The num_channels_in_section field indicates the number of virtual channel in the VCT section. Its value is restricted by the length of a section.

The short_name field indicates the name of a virtual channel.

The major_channel_number is 10 bit field and indicates a major channel number of a virtual channel defined in a corresponding order in for statement. Each of the virtual channels consists of a major channel number and a minor channel number. The major channel number plays a role of a reference number to a corresponding virtual channel for a user together with the minor channel number. For instance, the major channel number has values ranging from 1 to 99 and a pair of major/minor channel numbers does not have a duplicated value in the TVCT.

The minor_channel_number is 10 bit field and has values ranging from 0 to 999. The minor channel number operates as a two-part channel number together with the major channel number. In case that a service type is either ATSC_digital_television or ATSC_audio_only, the minor channel number has values ranging from 1 to 99. A pair of major/minor channel numbers does not have a duplicated value in the TVCT.

The modulation_mode field indicates a modulation mode of a transport carrier, which is related to a corresponding virtual channel.

A value of the carrier_frequency field is '0'. Although the carrier frequency is permitted to be checked using this field, it is contradicted.

The channel_TSID field has values ranging from '0 * 0000' to '0 * FFFF' and it is an MPEG-2 TSID, which is related to a TS delivering MPEG-2 program referenced by this virtual channel.

The program_number field attaches a virtual channel defined in the TVCT to MPEG-2 PROGRAM ASSOCIATION and TS PROGRAM MAP TABLE.

The ETM_location field indicates existence and location of an extended text message (ETM).

The access_controlled field is a 1 bit Boolean flag. If the flag is '1', it is able to indicate that an access of an event related to a corresponding virtual channel is restricted. If the flag is '0', it indicates that the access is not restricted.

The hidden field is a 1 bit Boolean flag. If a flag is '1', although a corresponding number is directly inputted by a user, an access is not permitted. A hidden virtual channel is skipped in case that a user surfs channels and can be seen as it is not defined.

The hide_guide field is a Boolean flag. If it is set to '0' for a hidden channel, a virtual channel and an event of the hidden channel can be seen in EPG display. If a hidden bit is not set, this field is ignored. Hence, non-hidden channel and its event belong to the EPG display irrespective of the state of a hide_guide bit.

The service_type field checks a service type delivered by a corresponding virtual channel. The service_type field can be used to inform a receiver that a corresponding service is a multi-view 3D service in the present invention. Although the value of the service_type field is exemplified as '0 * 13' in the present invention, it may be non-limited. The service type can be defined as the multi-view 3D video service (ATSC Multi-view service).

The source_id field checks a programming source related to a virtual channel. In this case, a source may be one selected from the group consisting of a video, a text, data, or an audio programming. The source id '0' is a reserved value and values ranging from '0 * 0001' to '0 * OFFF' have a sole value in the TS, which delivers the VCT. And, values ranging from '0 * 1000' to '0 * FFFF' have a sole value in a region level.

The descriptor_length field expresses a length of a descriptor, which follows a corresponding virtual channel, as a byte unit.

A descriptor is not included or more than one descriptor can be included in descriptor (). The information on elementary stream constructing a multi-view 3D video service can be included in the descriptor () in a form of the multiview_descriptor in the present invention.

The additional_descriptors_length field expresses a total length of following VCT descriptor list as a byte unit.

The CRC_32 field indicates a CRC value making a register in a decoder to be zero output.

FIG 14 is a diagram of a multi-view 3D video service descriptor according to one embodiment of the present invention.

As described in FIG. 13, the multiview descriptor is positioned in the TVCT and includes common information on the multi-view 3D video service of a corresponding virtual channel and the information on the elementary stream to which belongs to the common information.

The multiview descriptor may include the descriptor_tag, the descriptor_length, the PCR_PID, the num_3D_views, the camera_arrangement_type, the supported_angle_of_view_type, the supported_angle_of_view, the camera_to_object_distance, the number_elements, the elementary_PID, the camera_ID, the camera_position, the number_3D_views, the 3D_view_priority, the 3D_view_ID, the left_right_view, the other_camera_ID, the min_disparity, the max_disparity.

The fields included in the multiview descriptor are explained in FIG 7. The content not explained in FIG. 7 is additionally explained in the following description.

The PCR_PID is 13 bit field and indicates PID of transport stream packets including a PCR (program clock reference) field.

The elementary_PID is 13 bit field and corresponds to a packet identifier for an elementary stream.

By transmitting the multi view descriptor in a manner of being included in the TVCT, the receiver may be able to provide a multi-view 3D video service using the multi view descriptor.

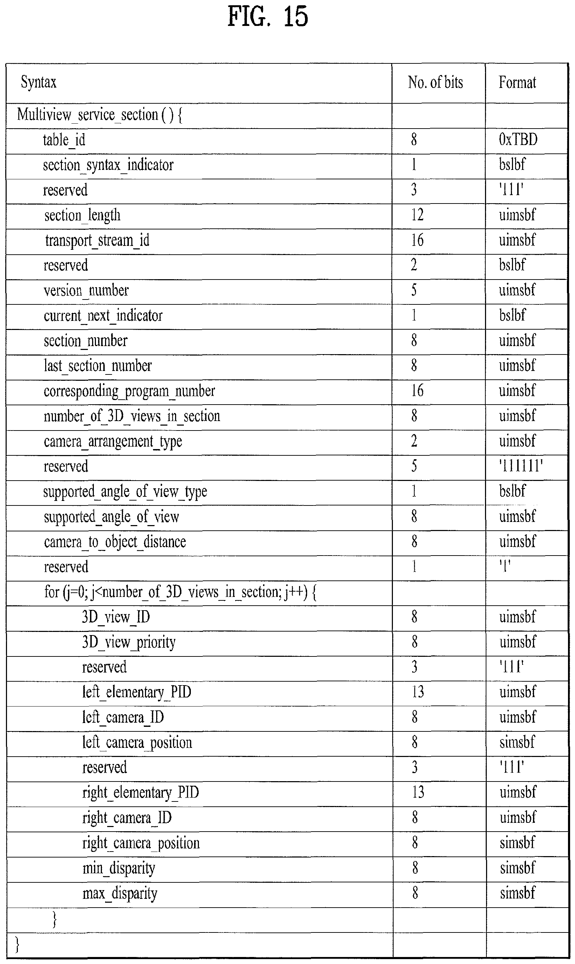

FIG. 15 is a diagram of an independent table to provide a multi-view 3D video service information according to one embodiment of the present invention.

FIG. 15 indicates a multiview service section and information on a multi-view 3D video service can be transmitted not a form of a descriptor of PSI/SI section but a form of an independent table.

The multiview service section may include a table_id, a section_syntax_indicator, a section_length, a transport_stream_id, a version_number, a current_next_indicator, a section_number, a last_section_number, a corresponding_program_number, a number_of_3D_views_in_section, a camera_arrangement_type, a supported_angle_of_view_type, a supported_angle_of_view, a camera_to_object_distance, a 3D_view_ID, a 3D_view_priority, a left_elementary_PID, a left_camera_ID, a left_camera_position, a right_elementary_PID, a right_camera_ID, a right_camera_position, a min_disparity, a max_disparity.

The fields included in the multiview service section are already explained earlier. The content not explained in the foregoing description is additionally explained in the following description.

The multiview service section provides information on a corresponding left/right view stream by a unit of 3D view. In this case, the corresponding_program_number field is used to interlock the information provided by the multiview service section with a practical channel or a service. In particular, corresponding program information can be interlocked with reference to the PMT corresponding to the program_number indicated by the corresponding_program_number field. It is possible to directly interlock with a virtual channel of ATSC or a service of DVB as well.

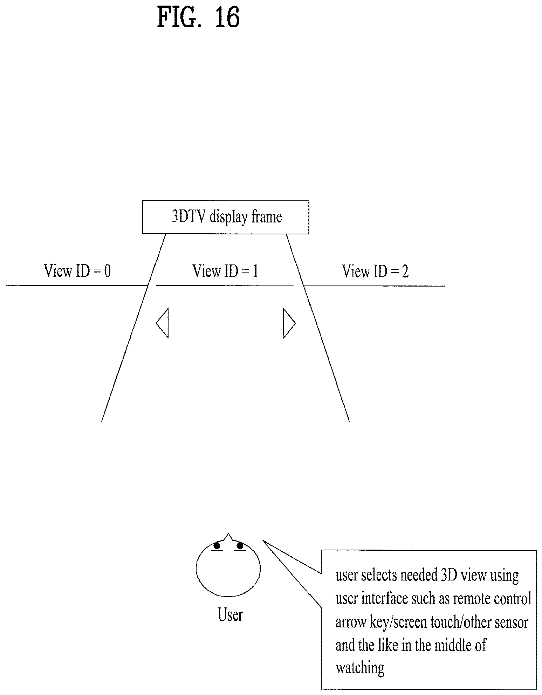

FIG. 16 is a diagram of a floor plan of a single 3DTV display case according to one embodiment of the present invention.

In case of a multi-view 3D video having 3 display viewpoints, the single 3DTV display receiver is able to watch 3D viewpoints (3D view) different from each other (for instance, different watching angle for an identical content) in a manner of selecting the 3D viewpoints via one 3D display frame.

Since the receiver is able to display one viewpoint at a time, a viewer is able to watch a preferable 3D view using such a user interface as a remote control arrow key, a screen touch, other sensor, or the like in the middle of watching. In the diagram, a user is watching a view ID 1. The user is able to watch a view ID 0 or a view ID 2 via the aforementioned method.

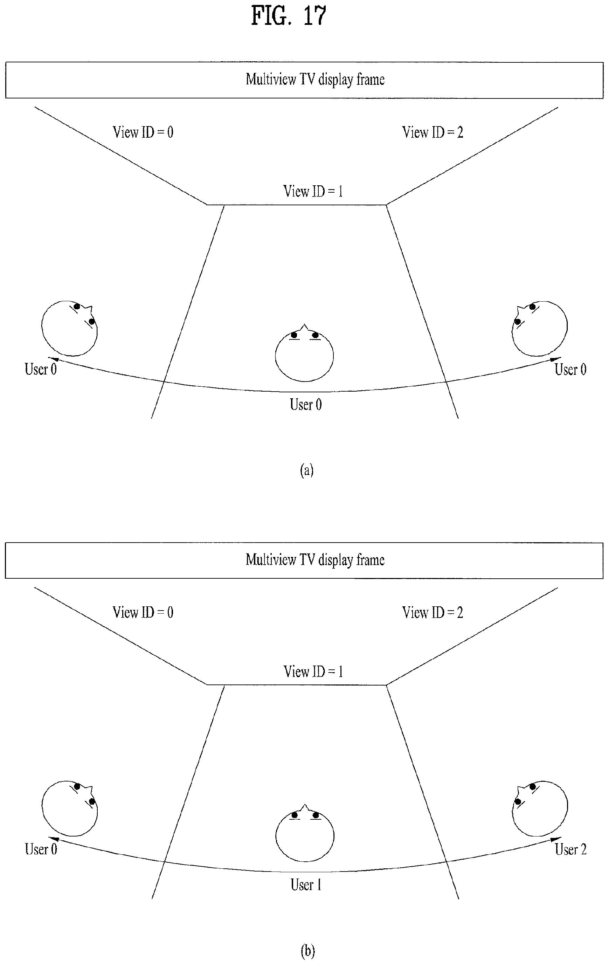

FIG. 17 is a diagram of a floor plan of a multi-view 3DTV display case according to one embodiment of the present invention.

FIG 17 (a) is a bird's-eye diagram of a case that one viewer is watching 3D views different from each other according to a watching angle or a position of the viewer. In FIG 17 (a), in case that the viewer is positioned at a left, a front, or a right of a display, the viewer is able to watch a video of view ID 0, view ID 1, or view ID 2, respectively.

FIG. 17 (b) is a bird's-eye diagram of a case that three viewers are watching 3D views different from each other according to a watching angle or a position of the viewers. In FIG 17 (b), a user 0 positioned at the left of a display watches a video of view ID 0 and a user 1 positioned at the front of the display watches a video of view ID 1. A user 2 positioned at the right of the display watches a video of view ID 2. The view ID according to a position may be randomly modified and may be non-limited to the aforementioned case.

In the following description, a process of rendering each 3D view in a manner of receiving a multi-view program video and a multi-view metadata by a receiver is explained according to a position of a descriptor.

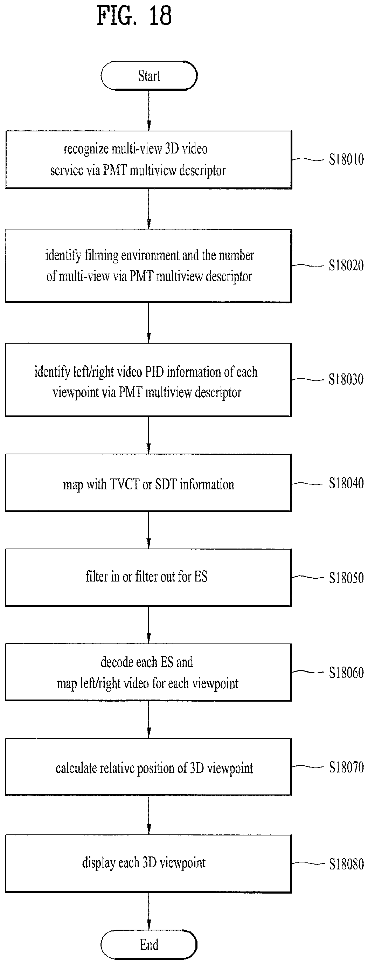

FIG. 18 is a flowchart of a case of receiving a multi-view 3D video service information using a multiview descriptor of a PMT according to one embodiment of the present invention.

It is able to know whether a corresponding program provides a multi-view 3D video service via the multiview descriptor of the PMT.

Filming environment information (a camera arrangement structure, distance between a camera and an object, and a provided total viewing angle) of a multiview service and the number of 3D views provided by the service can be identified via the multiview descriptor.

The number of 3D views included in a multiview 3DTV service and PID_L/PID_R information of a left/right video stream included by each of the 3D views are identified via the multiview descriptor.

One embodiment in case of a multiview service providing three 3D views and four elementary streams is shown in Table 1 as follows.

**[Table 1]**

| 3D_view_ID | 3D_view_priority | PID_L,PID_R | Cam_ID_L, Cam_ID_R | Cam_pos_L,Cam_pos_R | Min_disparity, Max_disparity |
|---|---|---|---|---|---|
| 0 | 1 | PID 0, PID 1 | CID 0, CID 1 | Cpos 0, Cpos 1 | Min 0, Max 0 |
| 1 | 0 | PID 1, PID 2 | CID 1, CID 2 | Cpos 1, Cpos 2 | Min 1, Max 1 |
| 2 | 2 | PID 2, PID 3 | CID 2, CID 3 | Cpos 2, Cpos 3 | Min 2, Max 2 |

A mapping to the information provided via the TVCT is performed using the program_number field. By doing this, it is able to know which virtual channel provides a corresponding program.

If the number of 3D views capable of being outputted in a 3D display device is 'N' and the number of 3D views provided by a program is 'M', in case of 'N =M', all provided 3D views, in particular, all provided elementary streams are filtered in.

In case of 'N < M', elementary streams related to the 3D views corresponding to a range ranging from 0 to 'N - 1' are filtered in by parsing a 3D_view_priority value for each of the 3D views. In particular, the elementary streams related to the 3D views of which the 3D_view_priority value is greater than the 'N' are all filtered out. Since the elementary streams greater than the number of 3D views capable of being outputted are unable to be displayed in the end even if they are decoded.

A left video and a right video for each of 3D views are mapped in a manner of combining with the decoded signal using a left_right_view field and the like included in the multiview descriptor.

In this case, a relative position of a corresponding 3D view is calculated in consideration of a position of a camera for the left and right video stream included in each of the 3D views.

Each of the 3D views is displayed as a multi-viewpoint output in consideration of the relative position of the 3D views obtained from the above step.

In case that a receiver selects to watch a 3D view of a different angle or selects to watch a plurality of 3D views at the same time, a viewpoint is switched by identifying a PID of a video stream for a left/right video of a new 3D view selected by a viewer using the information on a multiview service, which is ready in advance.

In case of selecting a part of viewpoints since the number of 3D views provided by a display device is less than the number of 3D views provided by a program, it may be outputted based on the 3D_view_priority or may follow a camera position, user's selection, or the like.

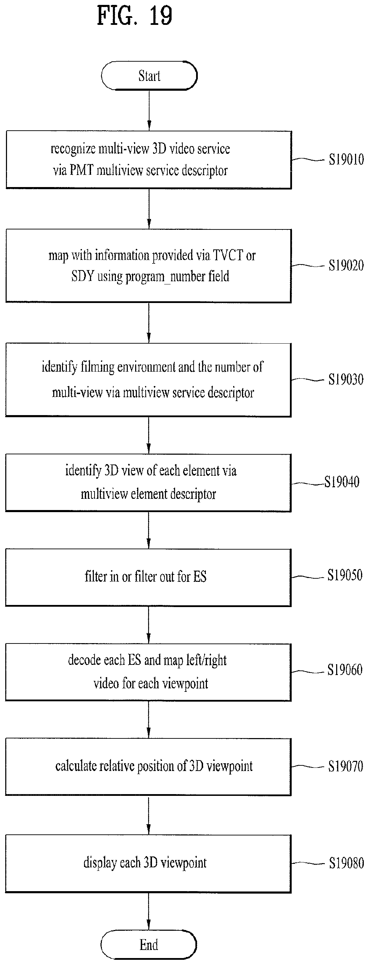

FIG 19 is a flowchart of a case of receiving a multi-view 3D video service information using a multiview service descriptor and a multiview element descriptor of a PMT according to one embodiment of the present invention.

It is able to know whether a corresponding program provides a multi-view 3D video (multiview 3DTV) service via the multiview service descriptor of the PMT. Or, it is able to know whether the multiview 3DTV service is provided via a multiview element descriptor, which is an ES level descriptor.

A mapping to the information provided via the TVCT is performed using the program_number field. By doing this, it is able to know which virtual channel provides a corresponding program.

Filming environment information of a multiview service and the number of 3D views provided by the service can be identified via the multiview service descriptor. The filming environment information may include a camera arrangement structure, distance between a camera and an object, and a provided total viewing angle.

3D view-related information related to each element is identified via the multiview element descriptor. The 3D view-related information may include whether a current stream belongs to which side among a left/right in a corresponding 3D view, other stream camera ID for another stream included by the corresponding 3D view, and disparity range of each of the views.

If the number of 3D views capable of being outputted in a 3D display device is 'N' and the number of 3D views provided by a program is 'M', in case of 'N =M', all provided 3D views, in particular, all provided elementary streams are filtered in.

In case of 'N < M', elementary streams related to the 3D views corresponding to a range ranging from 0 to 'N - 1' are filtered in by parsing a 3D_view_priority value for each of the 3D views. In particular, the elementary streams related to the 3D views of which the 3D_view_priority value is greater than the 'N' are all filtered out. Since the elementary streams greater than the number of 3D views capable of being outputted are unable to be displayed in the end even if they are decoded.

A left video and a right video for each of 3D views are mapped in a manner of combining with the decoded signal using a left_right_view field and the like included in the multiview descriptor.

In this case, a relative position of a corresponding 3D view is calculated in consideration of a position of a camera for the left and right video stream included in each of the 3D views.

Each of the 3D views is displayed as a multi-viewpoint output in consideration of the relative position of the 3D views obtained from the above step.

In case of switching a viewpoint in the middle of watching, the elementary streams of a view intended to watch are obtained using the 3D_view_ID, the 3D_view_priority, or the camera_position information. Following procedures are identical to the steps after the step of mapping the left/right video in a manner of filtering in.

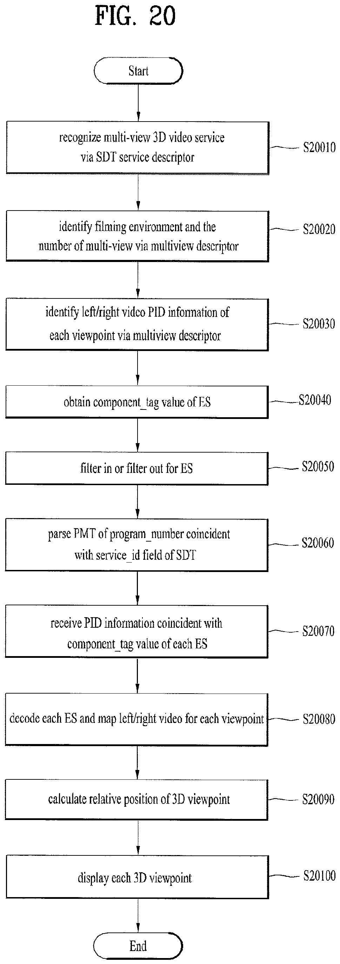

FIG. 20 is a flowchart of a case of receiving a multi-view 3D video service information using a multiview descriptor of an SDT according to one embodiment of the present invention.

It is able to know whether a corresponding service provides a multi-view 3D video service (multiview stereoscopic 3DTV service) using the service_type field of the service descriptor of the PMT. Or, it may be able to recognize a 3D video service by the existence of the multiview descriptor.

Filming environment information of a multiview 3D video service and the number of 3D views provided by the service can be identified via the multiview descriptor. The filming environment information may include a camera arrangement structure, distance between a camera and an object, and a provided total viewing angle.

The number of 3D views included in a multiview 3D video service and PID_L/PID_R information of a left/right video stream included by each of the 3D views are identified via the multiview descriptor. The 3D view can be separately designated by a receiver or can be determined in a manner of considering higher priority with reference to the 3D_view_priority field value.

If the number of 3D views capable of being outputted in a 3D display device is 'N' and the number of 3D views provided by a program is 'M', in case of 'N =M', all provided 3D views, in particular, a component_tag value of all provided elementary streams is obtained. In this case, it may be able to identify whether a corresponding ES is used for the multiview service and a type of a corresponding component.

In case of 'N < M', a component_tag of elementary streams related to the 3D views corresponding to a range ranging from 0 to 'N - 1' are obtained only by parsing a 3D_view_priority value for each of the 3D views. In particular, the elementary streams related to the 3D views of which the 3D_view_priority value is greater than the 'N' are all filtered out. Since the elementary streams greater than the number of 3D views capable of being outputted are unable to be displayed in the end even if they are decoded.

The PMT having the program_number field coincident with a value of service_id of the SDT is searched and then parsed.

A corresponding PID information is received in a manner of searching for the component_tag value of a stream identifier descriptor of an ES descriptor loop coincident with the previously obtained component_tag values of each of the streams among the elementary streams of the PMT.

The streams corresponding to each of the PIDs are decoded.

A left video and a right video for each of 3D views are mapped in a manner of combining with the decoded signal using a left_right_view field and the like included in the multiview descriptor.

In this case, a relative position of a corresponding 3D view is calculated in consideration of a position of a camera for the left and right video stream included in each of the 3D views.

Each of the 3D views is displayed as a multi-viewpoint output in consideration of the relative position of the 3D views obtained from the above step.

In case of switching a viewpoint in the middle of watching, component_tag information of the streams included in the viewpoint intended to watch is received using the camera_ID or the camera_position information. The viewpoint can be switched by executing the following steps after the step of searching for and parsing the PMT having the program_number field.

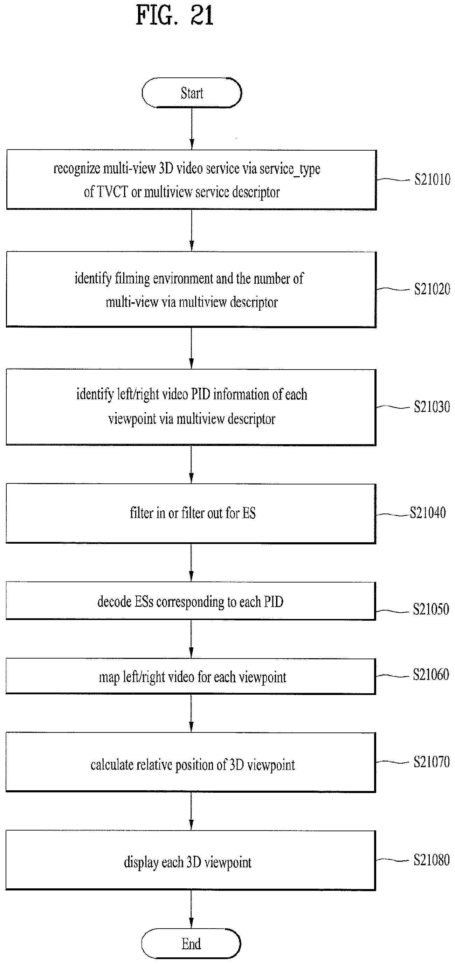

FIG. 21 is a flowchart of a case of receiving a multi-view 3D video service information using a multiview descriptor of a TVCT according to one embodiment of the present invention.

It is able to know whether a corresponding virtual channel provides a multi-view 3D video service (multiview stereoscopic 3DTV service) using the service_type field of the TVCT. Or, it may be able to recognize a multiview service by the existence of the multiview descriptor while using a service_type of ATSC digital television identical to legacy broadcasting.

Filming environment information of a multiview service and the number of 3D views provided by the service can be identified via the multiview descriptor. The filming environment information may include a camera arrangement structure, distance between a camera and an object, and a provided total viewing angle.

The number of 3D views included in a multiview 3D video service and PID_L/PID_R information of a left/right video stream included by each of the 3D views are identified via the multiview descriptor. The 3D view can be separately designated by a receiver or can be determined in a manner of considering higher priority with reference to the 3D_view_priority field value.

If the number of 3D views capable of being outputted in a 3D display device is 'N' and the number of 3D views provided by a program is 'M', in case of 'N =M', all provided 3D views, in particular, a PID value of all provided elementary streams is obtained.

In case of 'N < M', a PID of the elementary streams related to the 3D views corresponding to a range ranging from 0 to 'N - 1' are obtained only by parsing a 3D_view_priority value for each of the 3D views. In particular, the elementary streams related to the 3D views of which the 3D_view_priority value is greater than the 'N' are all filtered out. Since the elementary streams greater than the number of 3D views capable of being outputted are unable to be displayed in the end even if they are decoded.

The streams corresponding to each of the PID are decoded.

A left video and a right video for each of 3D views are mapped in a manner of combining with the previously decoded signal using a len_right_view field and the like included in the multiview descriptor.

In this case, a relative position of a corresponding 3D view is calculated in consideration of a position of a camera for the left and right video stream included in each of the 3D views.

Each of the 3D views is displayed as a multi-viewpoint output in consideration of the relative position of the 3D views obtained from the above step.

In case of switching a viewpoint in the middle of watching, PID information of the streams included in the viewpoint intended to watch is received using the camera_ID or the camera_position information. The viewpoint can be switched by executing the following steps after the step of decoding the streams corresponding to the PID.

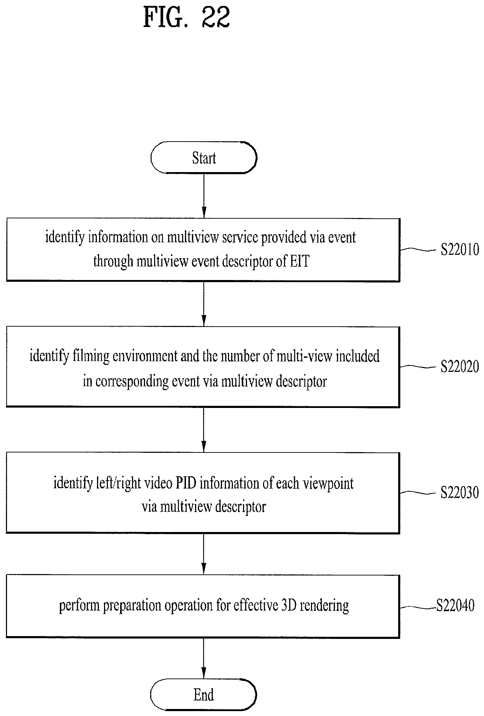

FIG. 22 is a flowchart of a case of receiving a multi-view 3D video service information using a multiview event descriptor of an EIT according to one embodiment of the present invention.

Information on the multiview service provided via a corresponding event is identified with reference to a multiview event descriptor provided for each event of the EIT.

The information on whether a 3D multiview service is provided for the corresponding event can be expressed in a broadcast guide (EPG).

The number of 3D views included in the corresponding event and the information on such a filming environment as a total viewing angle and the like are identified via a multiview event descriptor.

A 3D receiver may display these informations in the broadcast guide or may be able to perform a preparation operation for an effective 3D rendering in a manner of comparing the multiview display specifications of the 3D receiver with the specifications required by the event. The preparation operation, for instance, may include an operation of presetting a 3D multiview controller module in consideration of a camera arrangement, a camera distance, the number of views, and the like.

In order to perform an efficient 3D rendering, it may be able to compare the number of 3D views capable of being basically provided by the 3D receiver corresponding to 'N' with the number of 3D views provided by the event corresponding to 'M'. In case of 'N < M', a message like 'All 3D views provided by the present broadcasting may be not supported by the receiver of your own' can be outputted in a guide screen or in the middle of watching the corresponding event.

Moreover, the receiver may be able to make preparation in advance for a possible discontinuity of the number of 3D views on an event boundary using the information of the multiview event descriptor.

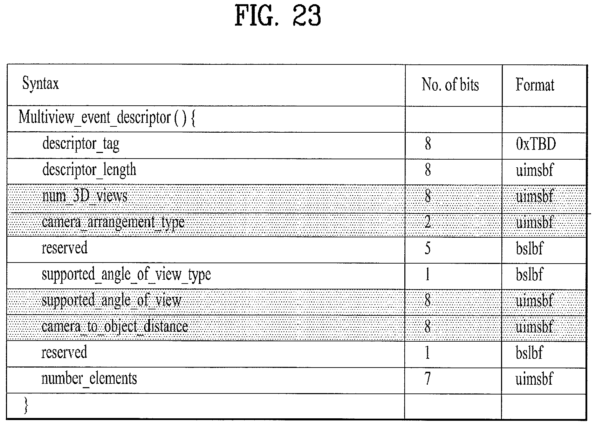

FIG 23 is a diagram of a multiview event descriptor according to one embodiment of the present invention.

It may be possible to provide information on a multi-view 3D video event in an event level in a manner of including the multiview event descriptor in FIG. 23 in the EIT. The multiview event descriptor in FIG. 23 may include a descriptor_tag, a descriptor_length, a num_3D_views, a camera_arrangement_type, a supported_angle_of_view_type, a supported_angle_of_view, a camera_to_object_distance, and a number_elements.

Explanation on the fields included in the table is described in detail in FIG. 7.

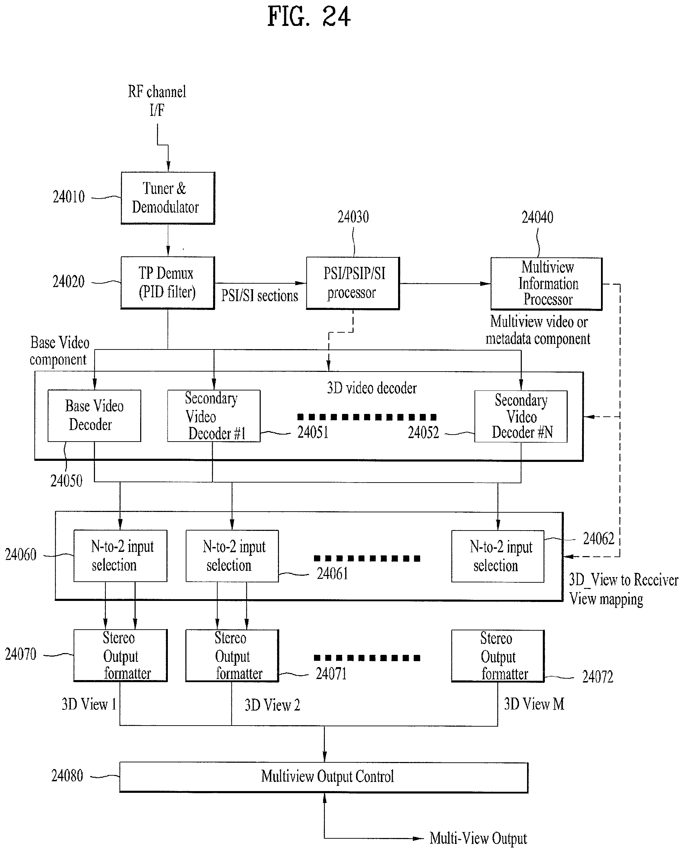

FIG. 24 is a diagram of a 3D receiver providing a multi-view 3D video service according to one embodiment of the present invention.

A broadcast signal receiver according to the present invention may be able to include a tuner and demodulator 24010, a demultiplexor 24020, a signal data processor 24030, a multiview information processor 24040, a plurality of video decoders 24050/24051/24052, a plurality of selectors 24060/24061/24062, a plurality of formatter 24070/24071/24072, and/or a multiview output control unit 24080.

The tuner and demodulator 24010 is configured to tune a received broadcast signal and may be able to output a demodulated broadcast signal to the demultiplexor 24020 after performing a demodulation for a tuned broadcast signal. In this case, the tuner 24010 may be able to perform a VSB (vestigial side band) demodulation, an OFDM (orthogonal frequency division multiplexing) demodulation, or the like.

The demultiplexor 24020 is configured to extract a video stream PID from a signaling data and configured to output to a plurality of the video decoder 24050/24051/24052 in a manner of extracting a video stream or a metadata component from a decoded broadcast signal using the corresponding video stream PID. In this case, a base video component is inputted in a base video decoder 24050 and a multi-view video component or a metadata component can be inputted in a 2nd video decoder 24051/24052.

The signaling data processor is configured to parse a signaling data from a signal outputted from the demultiplexor 24020 and configured to output the signaling data. In this case, the signaling data may include a PSI, a PSIP, a DVB-SI, and the like. A part of the signaling data is used in a manner of being inputted in the video decoder 24050/24051/24052 and a part of the signaling data can be inputted in the multiview information processor 24040.

The multiview information processor 24040 is configured to parse information on the multi-view 3D video service among the signal data inputted from the signaling data processor 24030. This parsed information is inputted to the video decoders 24050/24051/24052 or the selectors 24060/24061/24062 and used as the information to generate the multi-view 3D video service.

A plurality of the video decoders 24050/24051/24052 are configured to decode the components inputted from the demultiplexor 24020. In this case, the base video decoder 24050 is configured to decode a base video component and the 2nd video decoders 24051/24052 may be able to decode a multi-view video component or a metadata component. A plurality of the video decoders 24050/24051/24052 may be able to utilize the informations inputted from the signaling processor 24030 or the multiview information processor 24040.

A plurality of the selectors 24060/24061/24062 may be able to select two video signals corresponding to a left and a right video of each viewpoint among the plurality of video signals outputted from a plurality of the video decoders 24050/24051/24052. In particular, this is an operation of mapping a 3D viewpoint of a reception signal to a viewpoint of a receiving device. In this case, the information on the multi-view 3D video service outputted from the multiview information processor 24040 can be used.

A plurality of the formatters 24070/24071/24072 may be able to output a 3D video in a manner of receiving the left video and the right video of each viewpoint from a plurality of the selectors 24060/24061/24062 and performing a 3D format conversion and the like. 3D videos of each viewpoint outputted from a plurality of the formatters 24070/24071/24072 can be displayed as a multi-view output in a manner of being controlled by the multiview output control unit 24080.

By doing this, a user is able to watch a plurality of viewpoints included in the multi-view 3D video service simultaneously or selectively.

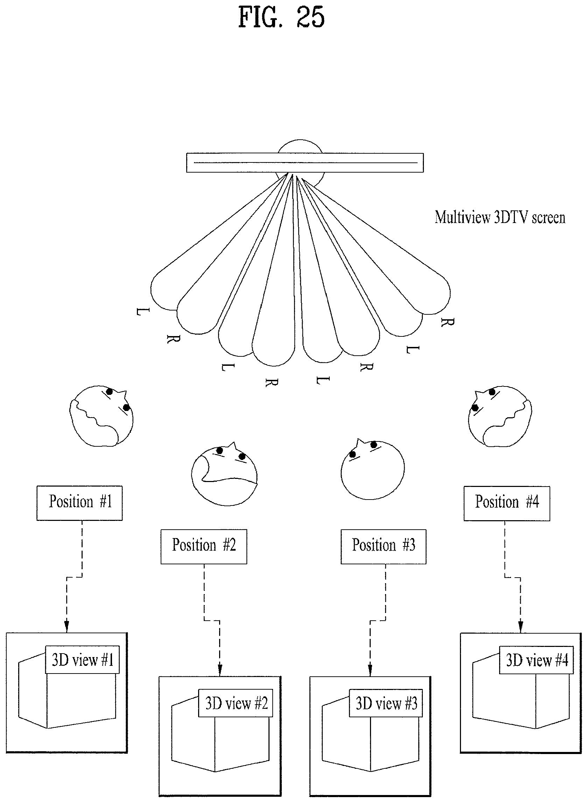

FIG. 25 is a diagram of an environment of a multi-view 3D video service according to one embodiment of the present invention.

Referring to FIG 25, a multiview 3D television provides an environment for simultaneously displaying four viewpoints. Users may be able to watch 3D viewpoints different from each other at their own position. In particular, it may be able to watch a 3D viewpoint 1, 2, 3, and 4 at the position 1, 2, 3, and 4, respectively. Each of the viewpoints can be generated by two videos, which corresponds to the left and right video.

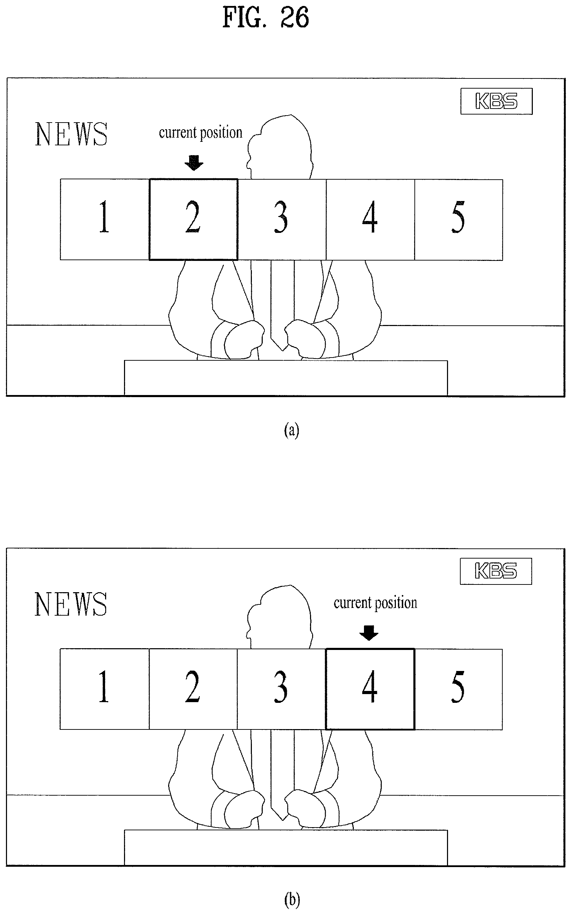

FIG 26 is a diagram of a user interface to watch a multi-view 3D video according to one embodiment of the present invention.

FIG. 26 shows an interface to check a position of each user. It may be able to simply check the number of a 3D viewpoint being outputted on every screen of each position. It is able to check the information on a current position when a confirmation button or a separately assigned button is pushed. Although a user watches a same television, a graphic screen outputted according to the position of the user may be different. In particular, it is possible to output an UI corresponding to the position of the user.

FIG. 26 (a) indicates a screen outputted at the position 2 only and FIG. 26 (b) indicates a screen outputted at the position 4 only.

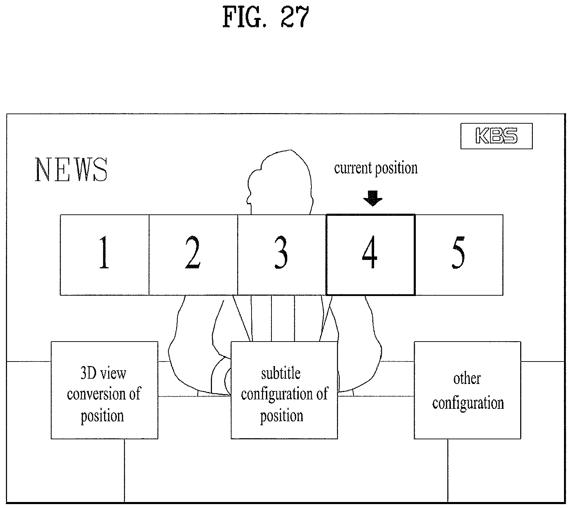

FIG. 27 is a diagram of a user interface in accordance with a position of a user according to one embodiment of the present invention.

User interfaces for EPG, volume adjustment, checking a current state, and the like can be commonly applied to all regions or angles irrespective of a position. Hence, there is no problem even if the related user interface is shared in all positions. Yet, in case that a configuration different from each other is needed according to the positions, if the configuring process is simultaneously displayed in all positions, it may cause chaos. An example of a case that configurations different from each other are needed according to the positions may include a selection of a 3D view per position, the selection of use a subtitle or a caption, the selection of language in case of using a subtitle or a caption, and the like.

In particular, in a situation that three viewers are simultaneously watching, if a user A launches a menu to change a configuration in relation to the position of the user A, the rest of users, i.e., a user B and a user C have to watch the menu screen launched by the user A although the user B and the user C need not change any configuration.

In order to solve the aforementioned problem, it enables a separate user interface to be used according to each position. There may exist many ways to implement this. One of the simplest things is to assign a button according to each of the positions.

If there exists a button per position, it is possible to separately launch a user interface according to each 3D view and to display unique information only corresponding to an output screen.

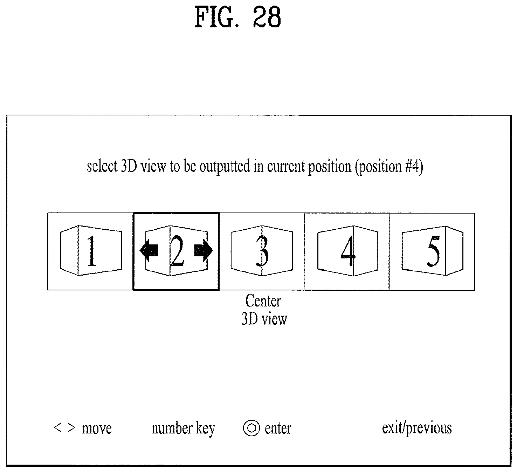

FIG 28 is a diagram of a user interface designating a mapping between a position of a user and an output 3D viewpoint according to one embodiment of the present invention.

According to the present invention, a user may be able to randomly select a 3D view to be outputted in a corresponding position. As shown in FIG. 28, the user selects one 3D view among all 3D views provided in a program. Each 3D view of the user interface is able to display a video together with the number of corresponding viewpoint. An initial setting value may be the currently outputting 3D view. There may exist a brief explanation on a corresponding viewpoint on every viewpoint.

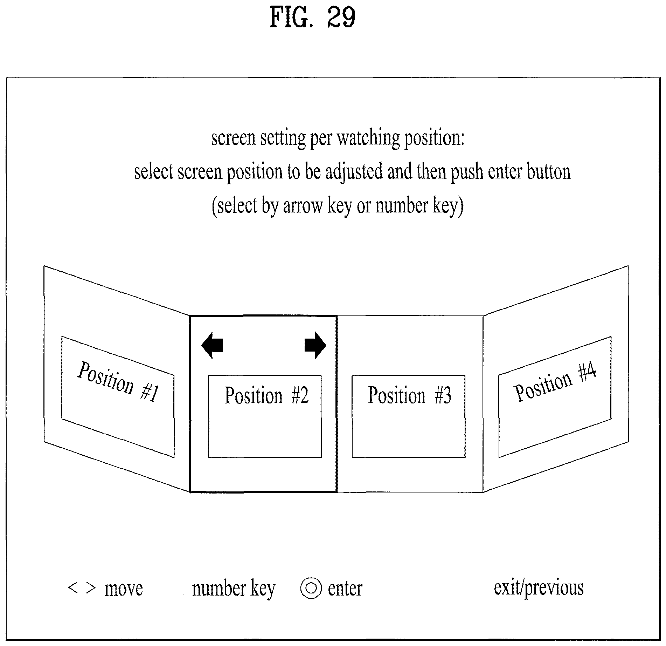

FIG. 29 is a diagram of a user interface of a keyword mode according to one embodiment of the present invention.

According to the present invention, 3D views of all positions and other selections can be configured in one position. Since this is a configuration commonly applied to all screens, the user interface can be displayed by a 2D view in a manner of performing a flattening besides a method of displaying by a 3D view.

If an enter button is pushed after a position of a screen to be adjusted is selected, it moves to the screen capable of configuring the selection for the position. In particular, a user interface screen corresponding to FIG 27 and FIG 28 can be sequentially activated.

In this case, if the initial setting value is set to the position by which a current remote control is operated, it may be able to minimize the number of pushing the remote control. Yet, in this case, it is necessary to identify a current position of the remote control.

As mentioned in the foregoing description, a process of storing a combination of each 3D viewpoint, position of camera, PID value, and the like to provide a user interface for a multi-view 3D video service is as follows.

As described in FIG 24, if the signal data processor and the multiview information processor receive the information on the whole of the multiview service and the information related to each of the 3D views, these informations can be used for the user interface. As an embodiment, by displaying the related information in a window, which is used to select a 3D view, of each position, a user may be able to refer the informations.

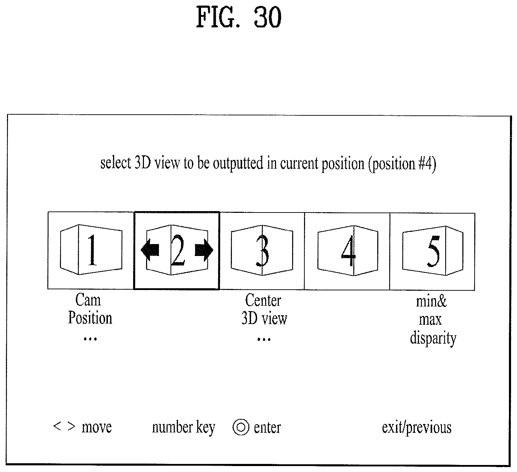

FIG. 30 is a diagram of mapping of a 3D viewpoint in accordance with each position in case that the 3D viewpoint provided by a program corresponds to 5 according to one embodiment of the present invention.

A different embodiment for the process of storing a combination of each 3D viewpoint, position of camera, PID value, and the like is as follows.

First of all, the multiview information processor parses the multiview descriptor included in the PSI, the SI, or the PSIP section.

A relative position of each 3D view is identified in a manner of analyzing the content of the multiview descriptor.

If there exist a total N number of 3D views, it may perform a classification as follows.

The classification is performed in a manner of calculating an average value of the positions of a left and right camera according to each viewpoint and then listing the average value from a smaller value in ascending order and then mapping a 3D viewpoint to each of the average values.

If the aforementioned classification is expressed by a formula, an average value is calculated by 'k (i) = average (left camera position (3D view ID == i), right camera position (3D view == i)', listed by 'F (u) = sort_in_ascending_order (k (i))', and is mapped by 'X (u) = array of (F (u), i).

In case that the positions of the left and right camera of a 3D view ID 0 correspond to - 2K and - K, in case that the positions of the left and right camera of a 3D view ID 1 correspond to - K and 0, and in case that the positions of the left and right camera of a 3D view ID 2 correspond to K and 2K, the result values of each level become k = {- 1.5K, - 0.5K, 1.5K}, F = {- 1.5K, - 0.5K, 1.5K}, and X = {(- 1.5K, 0), (-0.5K, 1), (1.5K, 2)}, respectively.

A 3D view ID having such a value as i corresponding to an arrangement X (u), which is generated by a sequential listing, is mapped to a position (cam position) 'u + 1' of a corresponding camera. The 'u + 1' is used since the 'u' starts from '0' and a cam position number shown in FIG. 30 starts from '1'. In particular, 3D view ID == 0, 3D view ID == 1, and 3D view ID == 2 are mapped to the cam position 1, cam position 2, and cam position 3, respectively. In this case, the cam position number is matched with the number shown in FIG. 30. Although a method of mapping according to the position of a camera is considered up to 3 viewpoints, it is apparent that it can be expanded to five as shown in FIG. 30.

If a user selects the cam position 'u + 1' in a 3D view selection screen, it may selectively display the multiview description information corresponding to the 3D view ID in response to the selection. In FIG. 30, a center information, min or max disparity information are depicted as an example.

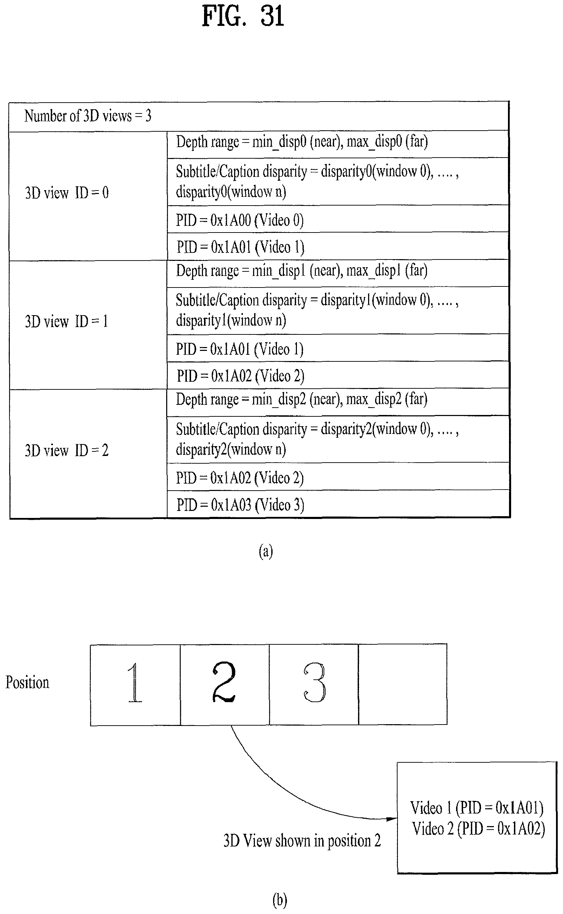

FIG. 31 is a diagram of a metadata and a 3D viewpoint in accordance with a position according to one embodiment of the present invention.

As shown in FIG. 31 (a), under a situation that the information on a multi-view 3D video service is obtained, a scenario of a case that a receiver selects a 3D view to be outputted in a specific position is as follows. In this case, a case that the specific position corresponds to a position #2 and the 3D view to be outputted corresponds to a 2nd 3D view, in other word, a case of selecting '3D view ID = 1' is explained as an example.

First of all, information corresponding to the '3D view ID = 1' is identified. In this case, the information may include PID value of an included video stream, and the like.

A corresponding video ES is filtered based on '0 * 1A01' and '0 * 1A02', which correspond to the PID values identified in the previous step.

After decoding the filtered video ES in the video decoder, a video signal corresponding to '3D view ID = 1' is outputted to the position #2.

By performing the aforementioned procedures, the left and right video included in a 3D video can be designated to the position #2 as shown in FIG. 31 (b).

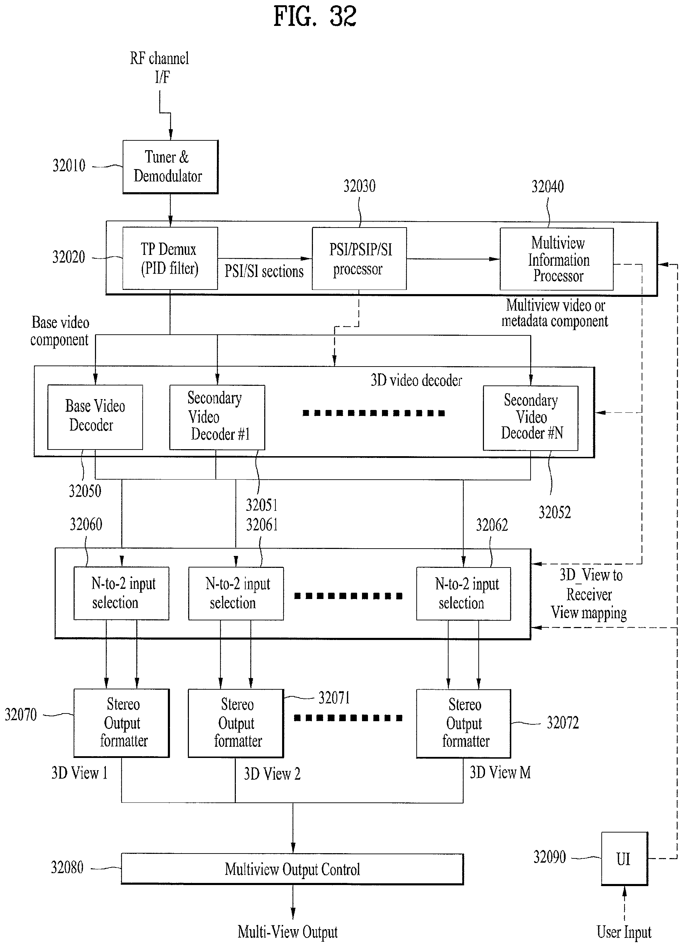

FIG 32 is a diagram of a 3D receiver providing a multi-view video service according to one embodiment of the present invention.

A broadcast signal receiver according to the present invention may be able to include a tuner and demodulator 32010, a demultiplexor 32020, a signal data processor 32030, a multiview information processor 32040, a plurality of video decoders 32050/32051/32052, a plurality of selectors 32060/32061/32062, a plurality of formatter 32070/32071/32072, a multiview output control unit 32080, and/or a user interface 32090.

The tuner and demodulator 32010 is configured to tune a received broadcast signal and may be able to output a demodulated broadcast signal to the demultiplexor 32020 after performing a demodulation for a tuned broadcast signal. In this case, the tuner 32010 may be able to perform a VSB (vestigial side band) demodulation, an OFDM (orthogonal frequency division multiplexing) demodulation, or the like.

The demultiplexor 32020 is configured to extract a video stream PID from a signaling data and configured to output to a plurality of the video decoder 32050/32051/32052 in a manner of extracting a video stream or a metadata component from a decoded broadcast signal using the corresponding video stream PID based on the PID for a 3D viewpoint selected by the user interface (UI). In this case, a base video component is inputted in a base video decoder 32050 and a multi-view video component or a metadata component can be inputted in a 2nd video decoder 32051/32052.

The signaling data processor 32030 is configured to parse a signaling data from a signal outputted from the demultiplexor 32020 and configured to output the signaling data. In this case, the signaling data may include a PSI, a PSIP, a DVB-SI, and the like. A part of the signaling data is used in a manner of being inputted in the video decoder 32050/32051/32052 and a part of the signaling data can be inputted in the multiview information processor 32040. In this case, the signaling data may be able to include the information on the 3D viewpoint selected by the user interface 32090.

The multiview information processor 32040 is configured to parse the information on the multi-view 3D video service for the viewpoint selected by the user interface 32090 among the signal data inputted from the signaling data processor 32030. This parsed information is inputted to the video decoders 32050/32051/32052 or the selectors 32060/32061/32062 and used as the information to generate the multi-view 3D video service.

A plurality of the video decoders 32050/32051/32052 are configured to decode the components inputted from the demultiplexor 32020. In this case, the base video decoder 32050 is configured to decode a base video component and the 2nd video decoders 32051/32052 may be able to decode a multi-view video component or a metadata component. A plurality of the video decoders 32050/32051/32052 may be able to utilize the informations inputted from the signaling processor 32030 or the multiview information processor 32040.

A plurality of the selectors 32060/32061/32062 may be able to select two video signals corresponding to a left and a right video of each viewpoint among the plurality of video signals outputted from a plurality of the video decoders 32050/32051/32052. In particular, this is an operation of mapping a 3D viewpoint of a reception signal to a viewpoint of a receiving device. In this case, a selection for the two video signals corresponding to the left and right video can be performed based on the 3D viewpoint selected by the user interface 32090. And, the information on the multi-view 3D video service outputted from the multiview information processor 32040 can be used.

A plurality of the formatters 32070/32071/32072 may be able to output a 3D video in a manner of receiving the left video and the right video of each viewpoint from a plurality of the selectors 32060/32061/32062 and performing a 3D format conversion and the like. 3D videos of each viewpoint outputted from a plurality of the formatters 32070/32071/32072 can be displayed as a multi-view output in a manner of being controlled by the multiview output control unit 32080.

By doing this, a user is able to watch a plurality of viewpoints included in the multi-view 3D video service simultaneously or selectively.

While the present invention has been described and illustrated herein with reference to the preferred embodiments and diagrams thereof, the present invention may be non-limited to the embodiments and it will be apparent to those skilled in the art that various modifications and variations can be made therein without departing from the scope of the appended claims. Thus, it is intended that the present invention covers the modifications and variations of this invention that come within the scope of the appended claims.

### MODE FOR INVENTION

As mentioned in the foregoing description, the related is described in the best mode for invention.

### INDUSTRIAL APPLICABILITY

As mentioned earlier, the present invention can be applied to an overall digital broadcasting system or a part of the digital broadcasting system.

## Claims

1. A digital broadcasting signal receiving device, comprising:
a tuner (24010, 32010) configured to receive a digital broadcasting signal including a plurality of video streams implementing a multi-view 3D video and a signaling data;
a signaling data processor (24030, 32030) configured to decode the signaling data including a Service Description Table, SDT, of Service Information, SI, in Digital Video Broadcasting, DVB, systems, in which a component descriptor specifying a type of a stream is included,
wherein the component descriptor comprises stream content information being a 4 bit field and component type information being an 8 bit field,
and wherein a combination of the stream content information and the component type information is used to indicate the stream carrying an enhancement view coded by a Multiview Video Coding, MVC, for the multi-view 3D video, wherein the enhancement view is carried by a stream which is different from a stream carrying a base view, wherein each of the plurality of the video streams included in the broadcasting signal includes intrinsic and extrinsic camera parameters for each camera respectively;
a decoder (24050, 24051, 24052, 32050, 32051, 32052) configured to decode a plurality of the video streams using the SDT; and
a formatter (24070, 24071, 24072, 32070, 32071, 32072) configured to output the video images of the decoded video streams as the multi-view 3D video.

2. The digital broadcasting signal receiving device of claim 1, wherein the digital broadcasting signal receiving device further comprises a multi-view output control unit (24080, 32080) configured to display the multi-view 3D video output in consideration of a relative position of each viewpoint.

3. The digital broadcasting signal receiving device of claim 1, wherein the SDT further includes multi-view 3D video information for converting the video streams into the multi-view 3D video, and the multi-view 3D video information comprises at least one selected from the group consisting of the number of viewpoint, a camera arrangement method, priority of each viewpoint, a viewing angle provided by the multi-view 3D video, distance between cameras, or an identifier of a different camera forming a 3D video together according to each viewpoint.

4. The digital broadcasting signal receiving device of claim 3, wherein the multi-view 3D video information is contained in the SDT in a form of a descriptor.

5. The digital broadcasting signal receiving device of claim 3, wherein if the number of viewpoints capable of being displayed in a receiver is less than the number of viewpoints included in the digital broadcasting signal, the priority of each viewpoint filters a part of a plurality of the video streams according to the priority.

6. The digital broadcasting signal receiving device of claim 1, further comprising:
a user interface module (32090) configured to display a position selection user interface for receiving user input selecting a position of a screen and display a 3D view selection user interface for receiving user input selecting a 3D view to be outputted in the position of the screen.

7. A method of receiving a digital broadcasting signal, comprising the steps of:
receiving a digital broadcasting signal including a plurality of video streams implementing a multi-view 3D video and a signaling data;
decoding the signaling data including a Service Description Table, SDT, of Service Information, SI, in Digital Video Broadcasting, DVB, systems in which a component descriptor specifying a type of a stream is included,
wherein the component descriptor comprises stream content information being a 4 bit field and component type information being an 8 bit field,
wherein a combination of the stream content information and the component type information is used to indicate the stream carrying an enhancement view which is coded by a Multiview Video Coding, MVC, for the multi-view 3D video, wherein the enhancement view is carried by a stream which is different from a stream carrying a base view, wherein each of the plurality of the video streams included in the broadcasting signal includes intrinsic and extrinsic camera parameters for each camera respectively,
decoding a plurality of the video streams using the SDT; and
outputting video images of the decoded video streams as the multi-view 3D video.

8. The method of claim 7, further comprising the step of displaying the multi-view 3D video output in consideration of a relative position of each viewpoint.

9. The method of claim 7, wherein the SDT further includes multi-view 3D video information for converting the video streams into the multi-view 3D video, and the multi-view 3D video information comprises at least one selected from the group consisting of the number of viewpoint, a camera arrangement method, priority of each viewpoint, a viewing angle provided by the multi-view 3D video, distance between cameras, or an identifier of a different camera forming a 3D video together according to each viewpoint.

10. The method of claim 9, wherein the multi-view 3D video information is contained in the SDT in a form of a descriptor.

11. The method of claim 10, wherein if the number of viewpoints capable of being displayed in a receiver is less than the number of viewpoints included in the digital broadcasting signal, the priority of each viewpoint filters a part of a plurality of the video streams according to the priority.

12. The method of claim 6, further comprising:
displaying a position selection user interface for receiving user input selecting a position of a screen; and
displaying a 3D view selection user interface for receiving user input selecting a 3D view to be outputted in the position of the screen.

13. A computer-readable medium comprising code portions, which, when executed on a processor, configure the processor to perform all steps of a method according to any one of claims 7 to 12.

## Patentansprüche

1. Digitale Rundsendungssignalempfangsvorrichtung, umfassend:
einen Tuner (24010, 32010), der konfiguriert ist, um ein digitales Rundsendungssignal zu empfangen, das eine Vielzahl von Videoströmen, die ein Mehrperspektiven-3D-Video implementiert, und Signalisierungsdaten umfasst;
einen Signalisierungsdatenprozessor (24030, 32030), der konfiguriert ist, um die Signalisierungsdaten zu dekodieren, die eine Dienstbeschreibungstabelle, SDT, von Dienstinformationen, SI, in digitalen Videorundsendungs-, DVB, -Systemen umfassen, in der ein Komponentendeskriptor umfasst ist, der eine Art eines Stroms spezifiziert,
wobei der Komponentendeskriptor Strominhaltsinformationen, die ein 4-Bit-Feld sind, und Komponentenartinformationen umfasst, die ein 8-Bit-Feld sind,
und wobei eine Kombination der Strominhaltsinformationen und der Komponentenartinformationen verwendet wird, um den Strom anzugeben, der eine verbesserte Perspektive mit sich führt, die für das Mehrperspektiven-3D-Video durch eine Mehrperspektivenvideokodierung, MVC, kodiert ist, wobei die verbesserte Perspektive durch einen Strom mit sich geführt wird, der von einem Strom verschieden ist, der eine grundlegende Perspektive mit sich führt, wobei jeder der Vielzahl von Videoströmen, die in dem Rundsendungssignal umfasst ist, jeweils intrinsische und extrinsische Kameraparameter für jede Kamera umfasst;
einen Dekodierer (24050, 24051, 24052, 32050, 32051, 32052), der konfiguriert ist, um eine Vielzahl der Videoströme unter Verwendung der SDT zu dekodieren; und
einen Formatierer (24070, 24071, 24072, 32070, 32071, 32072), der konfiguriert ist, um die Videobilder der dekodierten Videoströme als das Mehrperspektiven-3D-Video auszugeben.

2. Digitale Rundsendungssignalempfangsvorrichtung gemäß Anspruch 1, wobei die digitale Rundsendungssignalempfangsvorrichtung weiterhin eine Mehrperspektiven-Ausgabesteuereinheit (24080, 32080) umfasst, die konfiguriert ist, um das Mehrperspektiven-3D-Video anzuzeigen, das in Anbetracht einer relativen Position von jedem Blickwinkel ausgegeben ist.

3. Digitale Rundsendungssignalempfangsvorrichtung gemäß Anspruch 1, wobei die SDT weiterhin Mehrperspektiven-3D-Videoinformationen zum Umwandeln der Videoströme in das Mehrperspektiven-3D-Video umfasst, und die Mehrperspektiven-3D-Videoinformationen zumindest ein Element aus der Gruppe auswählen, die aus der Zahl des Blickwinkels, einem Kameraanordnungsverfahren, einer Priorität eines jeden Blickwinkels, einem Blickwinkel, der durch das Mehrperspektiven-3D-Video bereitgestellt wird, einem Abstand zwischen den Kameras oder einer Kennung einer anderen Kamera, die zusammen gemäß jedem Blickwinkel ein 3D-Video ausbilden, besteht.

4. Digitale Rundsendungssignalempfangsvorrichtung gemäß Anspruch 3, wobei die Mehrperspektiven-3D-Videoinformationen in der SDT in Form eines Deskriptors umfasst sind.

5. Digitale Rundsendungssignalempfangsvorrichtung gemäß Anspruch 3, wobei, falls die Anzahl von Blickwinkeln, die in einem Empfänger angezeigt werden kann, kleiner als die Anzahl von Blickwinkeln ist, die in dem digitalen Rundsendungssignal umfasst ist, die Priorität eines jeden Blickwinkels einen Teil einer Vielzahl der Videoströme gemäß der Priorität filtert.

6. Digitale Rundsendungssignalempfangsvorrichtung gemäß Anspruch 1, weiterhin umfassend:
ein Benutzerschnittstellenmodul (32090), das konfiguriert ist, um eine Positionsauswahl-Benutzerschnittstelle zum Empfangen einer Benutzereingabe anzuzeigen, die eine Position eines Schirms auswählt, und um eine 3D-Perspektivenauswahl-Benutzerschnittstelle zum Empfangen einer Benutzereingabe anzuzeigen, um eine 3D-Perspektive auszuwählen, die in der Position des Schirms auszugeben ist.

7. Verfahren zum Empfangen eines digitalen Rundsendungssignals, umfassend die Schritte:
Empfangen eines digitalen Rundsendungssignals, das eine Vielzahl von Videoströmen, die ein Mehrperspektiven-3D-Video implementiert, und Signalisierungsdaten umfasst;
Dekodieren der Signalisierungsdaten, die eine Dienstbeschreibungstabelle, SDT, von Dienstinformationen, SI, in digitalen Videorundsendungs-, DVB, -Systemen, in der ein Komponentendeskriptor umfasst ist, der eine Art eines Stroms spezifiziert,
wobei der Komponentendeskriptor Strominhaltsinformationen, die ein 4-Bit-Feld sind, und Komponentenartinformationen umfasst, die ein 8-Bit-Feld sind,
wobei eine Kombination der Strominhaltsinformationen und der Komponentenartinformationen verwendet wird, um den Strom anzugeben, der eine verbesserte Perspektive mit sich führt, die für das Mehrperspektiven-3D-Video durch eine Mehrperspektivenvideokodierung, MVC, kodiert ist, wobei die verbesserte Perspektive durch einen Strom mit sich geführt wird, der von einem Strom verschieden ist, der eine Grundperspektive mit sich führt, wobei jeder der Vielzahl von Videoströmen, die in dem Rundsendungssignal umfasst ist, jeweils intrinsische und extrinsische Kameraparameter für jede Kamera umfassen,
Dekodieren einer Vielzahl von Videoströmen unter Verwendung der SDT; und
Ausgeben von Videobildern der dekodierten Videoströme als das Mehrperspektiven-3D-Video.

8. Verfahren gemäß Anspruch 7, weiterhin umfassend den Schritt Anzeigen des Mehrperspektiven-3D-Videos, das in Anbetracht einer relativen Position eines jeden Blickwinkels ausgegeben ist.

9. Verfahren gemäß Anspruch 7, wobei die SDT weiterhin Mehrperspektiven-3D-Videoinformationen zum Umwandeln der Videoströme in das Mehrperspektiven-3D-Video umfasst, und die Mehrperspektiven-3D-Videoinformationen zumindest ein Element umfassen, das aus der Gruppe ausgewählt ist, die aus der Zahl des Blickwinkels, einem Kameraanordnungsverfahren, einer Priorität eines jeden Blickwinkels, einem Blickwinkel, der durch das Mehrperspektiven-3D-Video bereitgestellt ist, einem Abstand zwischen Kameras oder einer Kennung einer anderen Kamera, die zusammen ein 3D-Video gemäß einem jeden Blickwinkel ausbilden, besteht.

10. Verfahren gemäß Anspruch 9, wobei die Mehrperspektiven-3D-Videoinformationen in der SDT in Form eines Deskriptors umfasst sind.

11. Verfahren gemäß Anspruch 10, wobei, falls die Anzahl von Blickwinkeln, die in einem Empfänger angezeigt werden kann, kleiner als die Anzahl von Blickwinkeln ist, die in dem digitalen Rundsendungssignal umfasst ist, die Priorität eines jeden Blickwinkels einen Teil einer Vielzahl der Videoströme gemäß der Priorität filtert.

12. Verfahren gemäß Anspruch 6, weiterhin umfassend:
Anzeigen einer Positionsauswahl-Benutzerschnittstelle zum Empfangen einer Benutzereingabe, die eine Position eines Schirms auswählt; und
Anzeigen einer 3D-Perspektivenauswahl-Benutzerschnittstelle zum Empfangen einer Benutzereingabe, die eine 3D-Perspektive auswählt, die in der Position des Schirms auszugeben ist.

13. Computerlesbares Medium, das Kodeabschnitte umfasst, die bei Ausführung auf einem Prozessor den Prozessor konfigurieren, um alle Schritte eines Verfahrens gemäß zumindest einem der Ansprüche 7 bis 12 durchzuführen.

## Revendications

1. Dispositif de réception de signal de radiodiffusion numérique, comprenant :
un syntoniseur (24010, 32010) configuré pour recevoir un signal de radiodiffusion numérique incluant une pluralité de flux vidéo mettant en oeuvre une vidéo 3D multivue et des données de signalisation ;
un processeur (24030, 32030) de données de signalisation configuré pour décoder les données de signalisation incluant une table de description de service, SDT, d'informations de service, SI, dans des systèmes de radiodiffusion numérique de vidéos, DVB, dans lesquelles un descripteur de composant spécifiant un type d'un flux est inclus,
dans lequel le descripteur de composant comprend une information de contenu de flux étant un champ à 4 bits et une information de type de composant étant un champ à 8 bits,
et dans lequel une combinaison de l'information de contenu de flux et de l'information de type de composant est utilisée pour indiquer le flux transportant une vue d'amélioration codée par un codage vidéo multivue, MVC, pour la vidéo 3D multivue, dans lequel la vue d'amélioration est transportée par un flux qui est différent d'un flux transportant une vue de base, dans lequel chacun de la pluralité des flux vidéo inclus dans le signal de radiodiffusion inclut des paramètres intrinsèques et extrinsèques de caméra pour chaque caméra respectivement ;
un décodeur (24050, 24051, 24052, 32050, 32051, 32052) configuré pour décoder une pluralité des flux vidéo en utilisant la SDT ; et
un formateur (24070, 24071, 24072, 32070, 32071, 32072) configuré pour délivrer en sortie les images vidéo des flux vidéo décodés comme la vidéo 3D multivue.

2. Dispositif de réception de signal de radiodiffusion numérique selon la revendication 1, dans lequel le dispositif de réception de signal de radiodiffusion numérique comprend en outre une unité (24080, 32080) de commande de sortie de multivue configurée pour afficher la vidéo 3D multivue délivrée en sortie en prenant en considération une position relative de chaque point de vue.

3. Dispositif de réception de signal de radiodiffusion numérique selon la revendication 1, dans lequel la SDT inclut en outre des informations de vidéo 3D multivue pour convertir les flux vidéo en la vidéo 3D multivue, et les informations de vidéo 3D multivue comprennent au moins un choisi parmi le groupe consistant en le nombre de points de vue, un procédé d'agencement de caméras, une priorité de chaque point de vue, un angle de vue fourni par la vidéo 3D multivue, une distance entre caméras, ou un identifiant d'une caméra différente formant une vidéo 3D ensemble en fonction de chaque point de vue.

4. Dispositif de réception de signal de radiodiffusion numérique selon la revendication 3, dans lequel les informations de vidéo 3D multivue sont contenues dans la SDT sous une forme d'un descripteur.

5. Dispositif de réception de signal de radiodiffusion numérique selon la revendication 3, dans lequel, si le nombre de points de vue aptes à être affichés dans un récepteur est inférieur au nombre de points de vue inclus dans le signal de radiodiffusion numérique, la priorité de chaque point de vue filtre une partie d'une pluralité des flux vidéo en fonction de la priorité.

6. Dispositif de réception de signal de radiodiffusion numérique selon la revendication 1, comprenant en outre :
un module (32090) d'interface utilisateur configuré pour afficher une interface utilisateur de sélection de position pour recevoir une entrée d'utilisateur sélectionnant une position d'un écran et afficher une interface utilisateur de sélection de vue 3D pour recevoir une entrée d'utilisateur sélectionnant une vue 3D destinée à être délivrée en sortie à la position de l'écran.

7. Procédé de réception d'un signal de radiodiffusion numérique, comprenant les étapes de :
réception d'un signal de radiodiffusion numérique incluant une pluralité de flux vidéo mettant en oeuvre une vidéo 3D multivue et des données de signalisation ;
décodage des données de signalisation incluant une table de description de service, SDT, d'informations de service, SI, dans des systèmes de radiodiffusion numérique de vidéos, DVB, dans lesquelles un descripteur de composant spécifiant un type d'un flux est inclus,
dans lequel le descripteur de composant comprend une information de contenu de flux étant un champ à 4 bits et une information de type de composant étant un champ à 8 bits,
dans lequel une combinaison de l'information de contenu de flux et de l'information de type de composant est utilisée pour indiquer le flux transportant une vue d'amélioration qui est codée par un codage vidéo multivue, MVC, pour la vidéo 3D multivue, dans lequel la vue d'amélioration est transportée par un flux qui est différent d'un flux transportant une vue de base, dans lequel chacun de la pluralité des flux vidéo inclus dans le signal de radiodiffusion inclut des paramètres intrinsèques et extrinsèques de caméra pour chaque caméra respectivement ;
décodage d'une pluralité des flux vidéo en utilisant la SDT ; et
délivrance en sortie d'images vidéo des flux vidéo décodés comme la vidéo 3D multivue.

8. Procédé selon la revendication 7, comprenant en outre l'étape d'affichage de la vidéo 3D multivue délivrée en sortie en prenant en considération une position relative de chaque point de vue.

9. Procédé selon la revendication 7, dans lequel la SDT inclut en outre des informations de vidéo 3D multivue pour convertir les flux vidéo en la vidéo 3D multivue, et les informations de vidéo 3D multivue comprennent au moins un choisi parmi le groupe consistant en le nombre de points de vue, un procédé d'agencement de caméras, une priorité de chaque point de vue, un angle de vue fourni par la vidéo 3D multivue, une distance entre caméras, ou un identifiant d'une caméra différente formant une vidéo 3D ensemble en fonction de chaque point de vue.

10. Procédé selon la revendication 9, dans lequel les informations de vidéo 3D multivue sont contenues dans la SDT sous une forme d'un descripteur.

11. Procédé selon la revendication 10, dans lequel, si le nombre de points de vue aptes à être affichés dans un récepteur est inférieur au nombre de points de vue inclus dans le signal de radiodiffusion numérique, la priorité de chaque point de vue filtre une partie d'une pluralité des flux vidéo en fonction de la priorité.

12. Procédé selon la revendication 6, comprenant en outre :
l'affichage d'une interface utilisateur de sélection de position pour recevoir une entrée d'utilisateur sélectionnant une position d'un écran ; et
l'affichage d' une interface utilisateur de sélection de vue 3D pour recevoir une entrée d'utilisateur sélectionnant une vue 3D destinée à être délivrée en sortie à la position de l'écran.

13. Support lisible par ordinateur comprenant des parties de code qui, lorsqu'elles sont exécutées sur un processeur, configurent le processeur pour mettre en oeuvre toutes les étapes d'un procédé selon l'une quelconque des revendications 7 à 12.
